(19) **Europäisches Patentamt**

**European Patent Office**

**Office européen des brevets**

(11) **EP 1 659 526 A2**

(12) **EUROPEAN PATENT APPLICATION**

(43) Date of publication:
24.05.2006 Bulletin 2006/21

(51) Int Cl.:
*G06Q 10/00* (2006.01)    *G06Q 30/00* (2006.01)

(21) Application number: 05110195.4

(22) Date of filing: 31.10.2005

| | |
|---|---|
| (84) Designated Contracting States:<br>AT BE BG CH CY CZ DE DK EE ES FI FR GB GR HU IE IS IT LI LT LU LV MC NL PL PT RO SE SI SK TR<br>Designated Extension States:<br>AL BA HR MK YU<br><br>(30) Priority: 01.11.2004 US 980114<br>01.11.2004 US 980117<br><br>(71) Applicant: **SAP AG**<br>69190 Walldorf (DE)<br><br>(72) Inventors:<br>• **Caracas, Alexandru M.**<br>76646, Bruchsal (DE)<br>• **Schlank, Hila**<br>Sunnyvale, CA 94087 (US)<br>• **Niekamp, Tobias**<br>69181, St. Ilgen (DE) | • **Schmitt, Sascha H.**<br>68165, Mannheim (DE)<br>• **Venkatasubramanian, Ramshankar**<br>Santa Clara, CA 95051 (US)<br>• **Vogler, Hartmut K.**<br>Foster City, CA 94404 (US)<br>• **Farrenkopf, Eckhard**<br>Mountain View, CA 94041 (US)<br>• **Kagermann, Heinz**<br>69181, Leimen (DE)<br>• **Roggenkemper, Heinz U.**<br>Los Gatos, CA 95032 (US)<br>• **Babu, Suresh**<br>Los Altos, CA 94024 (US)<br><br>(74) Representative: **Richardt, Markus Albert**<br>**Richardt Patents & Trademarks**<br>**Leergasse 11**<br>**65343 Eltville am Rhein (DE)** |

(54) **System and method for management and verification of invoices**

(57) In order to improve the efficiency, speed and accuracy of invoice processing while providing flexibility that may be used to efficiently resolve many different types of invoice exceptions, an invoice management system (210) is proposed. The invoice management system comprises:

- an invoice data repository (212) adapted to store the transformed invoice data;
- a context builder (214) in operative connection with the invoice data repository and with a number of additional electronically accessible data sources (220, 221), the context builder being adapted to automatically retrieve additional information corresponding to the invoice data in accordance with required invoice data fields; and
- an invoice processor (213) in operative connection with the invoice data repository and the context builder, the invoice processor being adapted to verify each invoice according to a plurality of rules on the basis of the invoice data and the additional information and to create an exception for each unsuccessfully verified invoice.

FIG. 2A

EP 1 659 526 A2

**Description**

FIELD OF THE INVENTION

The present invention relates to data processing and data management, and in particular, to a system and method for automated management and verification of invoices and data associated with invoices.

When two entities engage in a business transaction, an invoice is typically generated to capture and memorialize important information about the transaction. For example, an invoice commonly includes a list of goods delivered or services performed, with corresponding prices, quantities, descriptions and charges. As a company grows, keeping track of invoices from suppliers of goods or services (i.e., vendors) can quickly become a difficult task. Different departments within a company may use hundreds or even thousands of different vendors. Furthermore, vendors may send their invoices to different people across the company. Many companies typically have internal or external departments for receiving and processing invoices, but the employees in such departments may have very little information about the nature of the transaction leading to the invoice. Thus, tracking and promptly paying valid invoices, and detecting and correcting erroneous or fraudulent invoices, is a major problem facing today's business community.

To manage and track the flow of invoices, companies often require vendors to associate additional information with each invoice such as a purchase order number, information about which business unit in the company ordered the goods or services, and various tracking and/or reference numbers. Additionally, vendors typically include their name, address and various reference and tracking numbers of their own on their invoices. However, one problem that arises is that the information provided on different invoices can vary drastically from vendor to vendor. Moreover, even if the same information is provided across all vendors, the "format" of the information may be different. For example, the format of the invoice document itself may "look" different because different information is presented in different physical portions of each invoice. As another example, a vendor based in the United States may bill in U.S. Dollars while a vendor based in Germany may bill in Euros. Other problems commonly associated with invoice processing include processing multiple invoices sent by the same vendor for the same job or processing invoices with missing or invalid information, to name just a few. As the size of an organization grows, processing invoices with these and other problems can become economically burdensome because of the increased difficulty for accurate and efficient human processing of invoices.

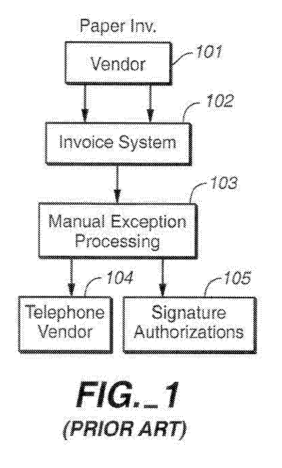

Fig. 1 is an example of one common approach to automated invoice processing. Typical invoice processing is user-centric, often starting with a user entering data from a vendor's paper invoice 101 into a computer software invoice system 102. Data associated with or relating to an invoice that is stored or processed electronically is referred to herein as "invoice data" (e.g., structured or unstructured data or other electronic information). Once the user has entered invoice data into the system, the program may cross reference a purchase order number against an expected purchase order number. If the purchase order on the incoming invoice does not match exactly with an existing purchase order, the system may indicate that an erroneous invoice has been received. Erroneous invoices are referred to as "exceptions," and typically initiate a manual exception handling process 103. The manual exception handling process may require a company employee to call the vendor at 104 to determine which purchase order corresponds to the particular invoice. Alternatively, the manual exception handling process may require a user to acquire signature authorizations at 105 if, for example, no purchase order was ever assigned to the goods or services received from the vendor.

However, existing user-centric invoice management systems are expensive and highly susceptible to errors. As the number of invoices processed by a company grows, the necessary human interaction may require hundreds or even thousands of employees to manually enter paper invoices and handle exceptions and further processing. Additionally, because human invoice processors are often far removed from direct interaction with the vendor, such individuals are more likely to make a number of different mistakes including overlooking invalid or erroneous invoice data, paying out the same invoice two or more times (i.e., paying on duplicates) or paying out the wrong amount, to name just a few. These and other mistakes and inefficiencies in processing invoices can become very expensive as a company grows.

OBJECT OF THE INVENTION

It is the object of the present invention to provide an invoice management system that can process invoices in a way that will improve the efficiency, speed and accuracy of invoice processing over existing techniques, thus obviating the disadvantages of the above-described prior art, while providing flexibility that may be used to resolve many different types of invoice exceptions efficiently through streamlined interaction with relevant information holders.

It is also an object of the present invention to provide a method of processing invoices that will improve the efficiency, speed and accuracy of invoice processing over existing techniques. Furthermore, it is an object of the present invention to provide a computer program product suitable for setting up an invoice management system in accordance with an aspect of the present invention and for translating into practice the method in accordance with the present invention.

SUMMARY OF THE INVENTION

According to a first aspect of the present invention the object is achieved by an invoice management system, comprising:

● an invoice data repository adapted to store the transformed invoice data;
● a context builder in operative connection with the invoice data repository and with a number of additional electronically accessible data sources, the context builder being adapted to automatically retrieve additional information corresponding to the invoice data in accordance with required invoice data fields; and
● an invoice processor in operative connection with the invoice data repository and the context builder, the invoice processor being adapted to verify each invoice according to a plurality of rules on the basis of the invoice data and the additional information and to create an exception for each unsuccessfully verified invoice.

According to a second aspect of the present invention the object is achieved by a method of processing invoices, comprising:

● storing invoice data corresponding to a plurality of invoices in a repository;
● automatically retrieving additional information corresponding to each invoice from a plurality of electronically accessible systems; and
● automatically performing a plurality of verification checks on each invoice using the additional information.

Furthermore, according to a third aspect of the present invention the object is achieved by a computer program product, comprising segments of computer code operable to set up an invoice management system according to said first aspect of the present invention and/or operable to perform a method according to said second aspect of the present invention when installed and executed on at least one electronic data processing device.

In a general way, embodiments of the present invention include architectures and methods for automated management of invoices. Embodiments of the present invention may include techniques for receiving and unifying invoice data, retrieving context information about each invoice, verifying each invoice and resolving invoice exceptions. The present invention includes software components for efficiently processing invoices, said software components preferably being provided and installed by means of a computer program product in accordance with said third aspect of the present invention. In other embodiments, the present invention includes methods of processing an invoice.

In a further embodiment of the invoice management system in accordance with the present invention, the invoice management system may further include a index database for performing searches. In this way highly complex searches, such as "similarity searches", may be performed to find invoice data or additional information (hereinafter also referred to as "context") for an invoice.

Further advantages and characteristics of the present invention can be gathered from the appended patent claims and the following description of preferred embodiments with reference to the enclosed drawings. The features mentioned above as well as below can be used in accordance with the invention either individually or in conjunction. The embodiments mentioned are not be be understood as an exhaustive enumeration but rather as examples with regard to the underlying concept of the present invention.

In accordance with an embodiment of the invention invoice data is retrieved by a method of retrieving information with similarity search capability.

The explosive growth and prevalence of computer technologies, data storage capacities and the Internet have led to an ever-increasing amount of information being stored in electronic form. As the amount of available electronic information grows, individuals and organizations have sought to put this information to a productive use. For example, many companies with large information bases may seek to use electronic information to improve the way the business is managed. The information stored in a companies data storage facilities may represent years of the companies experiences in a business environment, and such information may be useful in helping to solve new problems that the business faces as such problems arise. Furthermore, a company's information base may include historical or real-time data about the company's financial performance, research and development activities, or manufacturing activities to name just a few. A variety of systems exist for managing such information, but such systems must first be able to access useful information in a way that is meaningful.

While the availability of large volumes of information creates the potential for improved problem solving and decision-making, it is difficult to find and retrieve specific information for a particular use from the large volumes of information available. Thus, the ever-increasing volumes of information, together with the desire to make use of the information, have created a need for methods of retrieving specific pieces of information from a large information base. Information retrieval methods also act as the inputs to information management systems. Without an effective and efficient method of retrieving useful information, such systems cannot be used to their full potential.

Information retrieval methods for structured information typically require a user to specify what information is desired. This is usually done by allowing a user to specify a search request (i.e., a query). Traditional information retrieval methods have focused on finding and retrieving data that is an exact match of a query (e.g., retrieve the account information for a person with the name "John"). However, many useful pieces of information may not be recovered if an exact match is required. Thus, the notion of "similarity" searching has been attracting more attention as a method of retrieving information.

In a similarity search, information may be retrieved even though it does not exactly match the information specified in the search request (i.e., the retrieved data is either the same as or "similar" to a search criterion). Similarity searches typically perform a search across a broader range of information than traditional searches, and return information that differs from the search request in a variety of different ways. For example, similarity searching typically includes numerous processing steps for determining whether or not data that is not an exact match is nevertheless "similar" enough to the search criteria to warrant retrieval. However, because similarity searching typically requires processing steps other than a direct comparison of the search criteria to the data, such searches can be extremely inefficient, computationally intensive and slow. Moreover, the accuracy of the results of a similarity search may depend heavily on the methods employed to determine whether or not data is "similar." If the processing steps used in the similarity determination are not accurate, the search results will be meaningless, and the search may return information that is essentially useless. Examples may include scenarios where the information returned is completely unrelated to the problem at hand, or where the search returns too few or far too many results.

Embodiments of the inventive method for performing similarity searches thus enable to retrieve data in a way that improves the efficiency, speed and accuracy of information retrieval over existing techniques.

Embodiments of the present invention include methods for retrieving information from an information base. In one embodiment, the present invention includes specifying a first query including one or more specified attribute values corresponding to one or more attributes, performing a count-only query on a structured information base for information elements having one or more attribute values within a first range, the first range including the specified attribute values, and performing a retrieval query for information elements having one or more attribute values within a second range, wherein the second range includes the first range.

In one embodiment, the count-only query returns a value equal to the number information elements having a global similarity to the first query greater than a threshold value.

In another embodiment, the threshold value is equal to a sum of weighted local similarity values.

In another embodiment, the present invention includes a similarity model including local similarity functions, and local similarity values may be obtained using inverse similarity functions.

In yet another embodiment, an initial threshold value is based on a probability of obtaining a minimum number (K) of information elements.

In another embodiment, the present invention includes specifying a first query including one or more specified attribute values corresponding to one or more attributes, generating a threshold value, generating a local similarity value for each of the one or more attributes based on the threshold value, generating a first range based on each local similarity value, the first range including the specified attribute values, performing a count-only query on a structured information base for information elements having one or more attribute values within the first range, and performing a retrieval query for information elements having one or more attribute values within a second range, wherein the second range includes the first range.

Additional embodiments will be evident from the following detailed description and accompanying drawings, which provide a better understanding of the nature and

advantages of the present invention.

BRIEF DESCRIPTION OF THE DRAWINGS

Fig. 1          is an example of one common approach to automated invoice processing.

Fig. 2A-B     illustrate an architecture for an invoice management system according to one embodiment of the present invention.

Fig.3           illustrates a method of processing an invoice according to one embodiment of the present invention.

Fig. 4          is an example of gathering additional information corresponding to the invoice data according to another embodiment of the present invention.

Fig.5      illustrates a method verifying an invoice according to another embodiment of the present invention.

Fig. 6      illustrates a method of resolving an exception according to another embodiment of the present invention.

Fig.7      illustrates an invoice management system according to another embodiment of the present invention.

Fig. 8      is an example of a unifier according to one embodiment of the present invention.

Fig. 9      is an example of a context builder according to one embodiment of the present invention.

Fig. 10      is an example of an invoice processor according to one embodiment of the present invention.

Fig.11      is an example of an exception manager according to one embodiment of the present invention.

Fig. 12      is an example process flow for resolving an exception according to one embodiment of the present invention.

Fig. 13A-F      are examples of a graphical user interfaces for managing invoice exceptions according to one embodiment of the present invention.

Fig. 14      is another example process flow for resolving an exception according to another embodiment of the present invention.

Fig. 15A-B      are examples of graphical user interfaces presented for a missing information exception according to another embodiment of the present invention.

Fig. 16      is another example process flow for resolving an exception according to another embodiment of the present invention.

Fig. 17A-C      are examples of information that may be retrieved and presented to a user while processing blocked invoices according to another embodiment of the present invention.

Fig. 18      is another example process flow for resolving a line item mismatch exception according to another embodiment of the present invention.

Fig. 19      is another example process flow for resolving a missing goods received exception according to another embodiment of the present invention.

Fig. 20      illustrates a method of retrieving information elements from a structured information base according to one embodiment of the present invention.

Fig. 21      illustrates a method of retrieving information according to one embodiment of the present invention.

Fig. 22      illustrates generating a range for a count-only query according to another embodiment of the present invention.

Fig. 23      illustrates generating a range for a retrieval query according to another embodiment of the present invention.

Fig. 24      illustrates generating a threshold value according to another embodiment of the present invention.

Fig. 25      is an example of a query according to one embodiment of the present invention.

Fig. 26      illustrates representations and notations that may be used in the course of specifying of a similarity model that may be used to determine the similarity between a query and an information element according to one embodiment of the present invention.

Fig. 27      illustrates a conceptual model that may be used to further understand the concept of a threshold in a global similarity model.

Fig. 28        illustrates count-only query ranges using an M-cube model according to one embodiment of the present invention.

Fig. 29        shows an example of an M-cube for the case M = 2.

Fig. 30        illustrates retrieval query ranges using an M-cube model according to one embodiment of the present invention.

Fig. 31        is example pseudo code for retrieving information according to one specific embodiment of the present invention.

DETAILED DESCRIPTION

Described herein are techniques for managing, verifying and otherwise processing invoice data. In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include obvious modifications and equivalents of the features and concepts described herein.

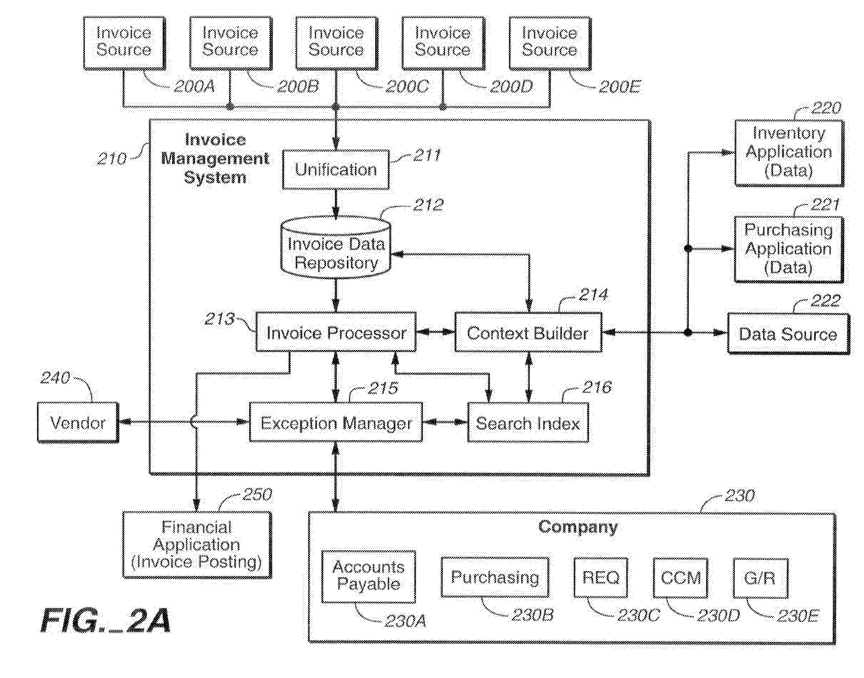

Embodiments of the present invention include a software architecture for managing and verifying invoice data. Fig. 2A illustrates an architecture for an invoice management system 210 according to one embodiment of the present invention. Invoices and their associated data are received from multiple distinct sources 200A-200E in different formats. For example, invoices may be received in paper form through traditional channels such as through the postal system, or electronically through a variety of channels such as a web portal, email, or facsimile. If invoices are received in paper or other non-electronic form, an optical character recognizer ("OCR") may be used to translate the data from the paper invoice into electronic form, for example.

Because the present invention allows invoices to be received from different sources, the incoming invoice data is typically received in different formats. For example, invoice data may be received as email text, Adobe□ ".pdf" files, text documents, images, extended markup language ("XML"), electronic data interchange ("EDI") or other structured or unstructured, standard or non-standard formats. In accordance with the present invention, invoice management system 210 includes a unification engine 211 that transforms the incoming invoice data into a common format, which is suitable for processing by means of electronic data processing means, in particular by means of data processing means implemented in software form, i.e. as software components. The step of transforming the incoming structured and/or unstructured invoice data into a common format is sometimes referred to as a "normalization" step. The normalized invoice data may then be stored in an invoice data repository 212 for centralized access and management. In one embodiment, the invoice data is stored in an XML format, which may have a predefined schema (e.g., EBPXML). Of course, other formats could be used. For example, invoices may be stored in table form using relational databases. In other embodiments, invoices may be stored and/or processed as objects (i.e., invoice objects). Invoices may further include references to relevant information stored as tables or objects in other systems (i.e., context).

One problem associated with invoice management and processing is that it is often difficult to effectively process an invoice based solely on the invoice data received from the vendor. Furthermore, the invoice data received from a vendor is often incomplete, incorrect or outright fraudulent. Therefore, the invoice management system 210 further includes a context builder 214 coupled to invoice data repository 212. Context builder 214 may be used to automatically gather additional information corresponding to each invoice, so that each invoice may be processed faster and more efficiently. Context builder 214 may access other data sources both inside and outside the company to gather additional information corresponding to an invoice. For example, context builder 214 may access data in other software systems or applications such as an inventory application 220 or purchasing application 221. Furthermore, context builder 214 may access other structured or unstructured data from other data sources such as network servers, local computers, document repositories or document management systems (to name just a few) to gather information about purchase orders, goods received, business partners, general ledger, contracts and contacts. In one embodiment, context builder 214 may allow users or administrators to specify what other sources or types of additional information may be beneficial for processing invoices (as opposed to programmers). Accordingly, relevant data may be gathered by context builder 214 and used to augment incoming invoice data with relevant context so that the invoice may be processed more efficiently. For example, in one embodiment context builder 214 automatically populates invoice data fields in order to reduce or eliminate data entry by a human user. Additional features and functionality may be incorporated into context builder 214 as described below.

Invoice management system 210 further includes an invoice processor software component 213 coupled to both invoice data repository 212 and context builder 214. Invoice processor 213 may use data from invoice data repository 212 and the data gathered by context builder 214 to automatically verify the invoice data. For example, invoice processor may perform checks for duplicate invoices, errors & omissions, fraud, and routing errors. If the invoice data is verified successfully, the invoice data may be posted in a financial application 250, for example. However, if the invoice data is not verified, an exception manager 215is invoked, which may report problems to relevant personnel and control the resolution of the problem.

In one embodiment, exception manager 215 provides functionality to control the processing of invoice exceptions and may further facilitate collaborative resolution of invoice problems. One advantage of the present embodiment is that exception manager 215 may act as a single point for capturing and processing of exceptions and for automating the dispute resolution process using collaborative tools. For example, in one embodiment all exceptions are stored in an exception repository (not shown) for centralized management and an "exception case" may be created by the system. The system may intelligently forward the exception case to different individuals in the company or external individuals if a particular individual's participation is necessary for resolution of the exception, i.e. for the particular type of exception. The information transferred between individuals may be intelligently controlled so that each individual only receives the information necessary for solving particular problems. For example, exception manager 215 may forward information about the exception to users in different groups in company 230 such as accounts payable 230A, purchasing 230B, requisitions ("REQ") 230C, cost center management ("CCM") 230D or goods received ("G/R," e.g., a manufacturing facility) 230E if the participation of employees in those groups is required to resolve the issue. Exception manager 215 provides flexible automated collaboration between such users and the vendors associated with each invoice. For example, in one embodiment exception manager 215 manages notifications pertaining to exceptions between one or more employees in the company 230 and employees at a vendor 240. Vendor 240 may receive invoice information corresponding to an exception case from a user over email along with comments and an optional interactive form. Vendor 240 may then dispute the exception (e.g., if the exception pertains to a duplicate or fraudulent invoice), confirm the exception or provide additional information via the interactive form, for example. In this way, the exception manager is adapted to perform a data reduction on the invoice data and/or on the additional information which is to be operated on by a respective exception handling procedure in accordance with an exception type. This approach significantly reduces data traffic while effectively speeding up exception handling as individual users are confronted with information with respect to their respective working domain, such that user mistakes will be reduced. Once the exception is resolved, the exception case is closed and the invoice data may be posted. Posting and exception (including dispute) are examples of a invoice status of a given invoice, which is subject to changes during invoice processing. Generally, an invoice is handled in accordance with said invoice status.

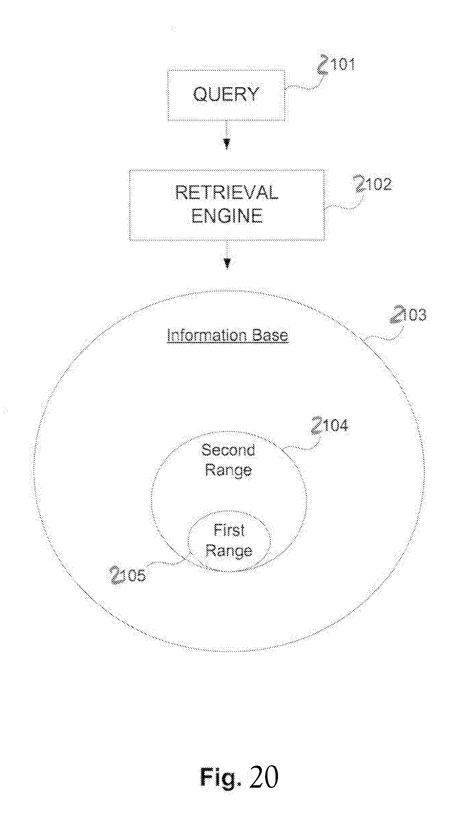

Invoice management system 210 may further include a search engine including, for example, a search index 216 that may be accessed by invoice processor 213, context builder 214 and exception manager 215, i.e. search index 216 is in operative connection with at least one of the context builder, the invoice processor, and the exception manager. Invoice processor may use search engine capabilities to access the search index to search for invoice information in the same system or other systems. For example, an index of processed invoices may be maintained, and a search through the index may be made as new invoices enter the system (e.g., for duplicate detection). The index may be a combined subset of multiple database tables that includes a variety of invoice data. Simple checks for the same date or same amount may be performed by a simple database search. However, more complex searches such as "similarity searches" may be performed to find invoice data or context for an invoice. In one embodiment, information may be retrieved using similarity search techniques, such as the similarity search techniques disclosed herein especially with reference to Fig. 20 to 31. Context builder 214 may access the search index 216 for searching for additional information about the invoice. Finally, exception manager 215 may access the search index to allow users to search exception cases or context as described below. Search functionality may also be supplied to users during exception management.

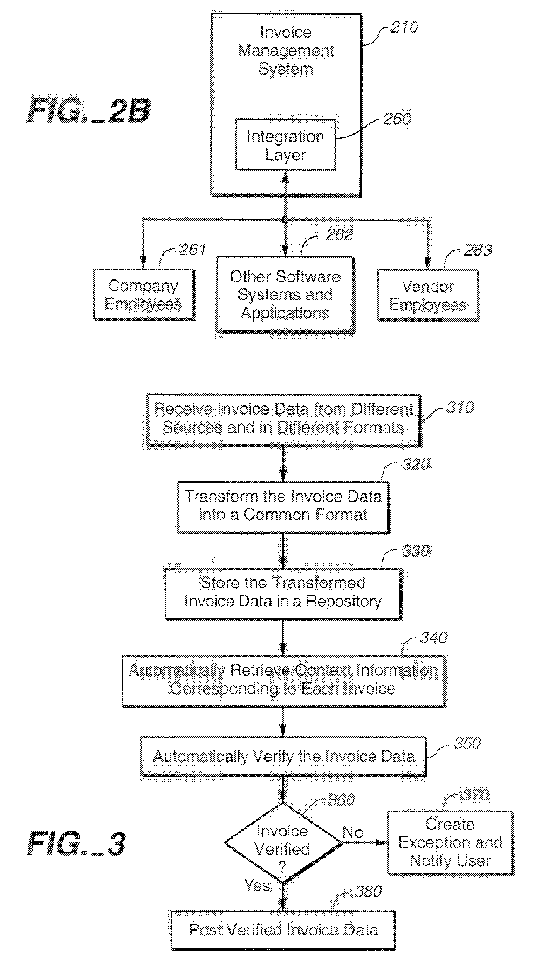

Invoice management system 210 may further include an integration layer as shown in Fig. 2B. Integration layer 260 may include one or more code modules that interface with other systems or people that are involved in invoice processing. Integration layer 260 enables the system to exchange data (e.g., posting, accessing context or parking) and perform actions such as sending confirmations, requesting input, obtaining authorizations or running invoice queries to name just a few.

Integration layer 260 includes software components that allow invoice management system 210 to provide communications (e.g., email) between internal company employees 261. Integration layer 260 may also support electronic communication with and access to information in other software systems and applications 262. Finally, integration layer 260 includes software components that allow invoice management system 210 to provide communications (e.g., email) between internal company employees 261 and vendor employees 263.

Fig. 3 illustrates a method of processing an invoice according to one embodiment of the present invention. At 310, invoice data is received from different sources and typically in different formats. For example, the invoices may be received in XML, EDI, IDOC or an OCR format. At 320, the invoice data is transformed into a common format. At 330, the transformed invoice data is stored in a repository. In one embodiment, the invoice data is stored in an XML format, which may have a predefined schema (e.g., EBPXML). Of course, other formats could be used. At 340, the system automatically retrieves context information corresponding to each invoice. In one embodiment, invoice data is automatically populated when additional information about the invoice is retrieved. At 350, the invoice data is automatically verified. If the invoice data passes verification at 360, the verified invoice data is posted. If the invoice data does not pass verification, an exception is automatically created and one or more users are notified at 370.

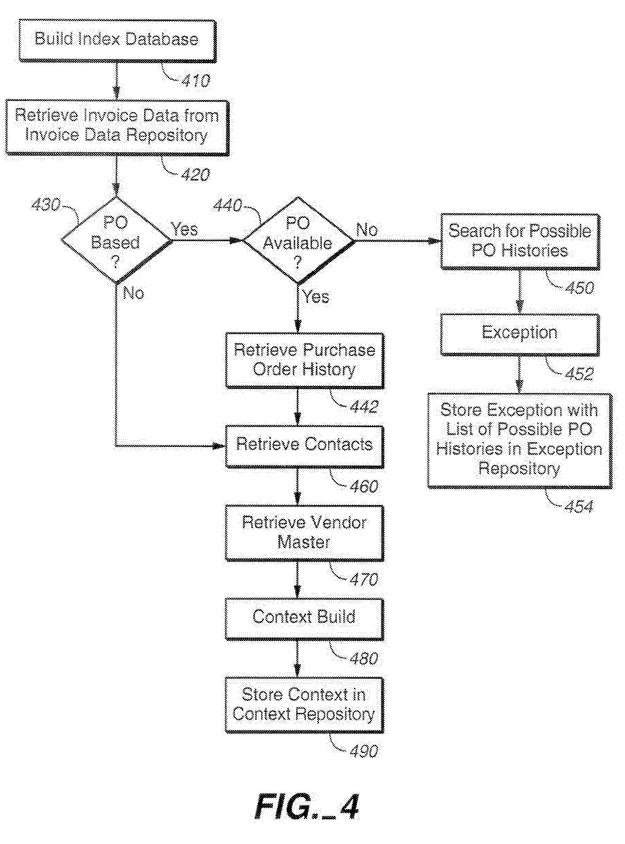

Fig. 4 is an example of retrieving context information (additional information) corresponding to the invoice data according to one embodiment of the present invention. At 410, a search index is created so that relevant information corresponding to invoice data (i.e., context) may be accessed. Examples of context information that may be used to augment invoice data may include purchase order, purchase order history, goods received, services rendered, requisitions, shipping notices, delivery notices, contracts, business partner information, contact information and related information. Context information may further include vendor master data such as the vendor's name, address, phone numbers, fax numbers and bank information, for example. Context information may be accessed using an index repository for accessing the information remotely, for example. Alternatively, the context information may be stored directly in a context repository or stored in the invoice data repository if the information is used to automatically populate invoice data fields. In the present example, the existence of a purchase order ("PO") is determined prior to retrieval, which is advantageous but not necessary. For example, at 420 invoice data may be retrieved from the invoice data repository. At 430, the system checks to see if the invoice is based on a purchase order. If an invoice is based on a purchase order, the system will determine whether or not the purchase order is included in the invoice data at 440. If no purchase order number is included in the invoice data, the system will automatically search for possible purchase order histories at 450, and an exception case is created at 452. The exception is stored with a list of possible purchase order histories in an exception repository for ultimate resolution by a user at 454. If the invoice data includes a purchase order, the purchase order history is retrieved at 442. Further information such as contact data and vendor master data may also be retrieved at 460 and 470. At 480, the retrieved data is associated with the invoice data (i.e., a "context" is built) to help users resolve exceptions should they occur. At 490, the context may be stored in a context repository.

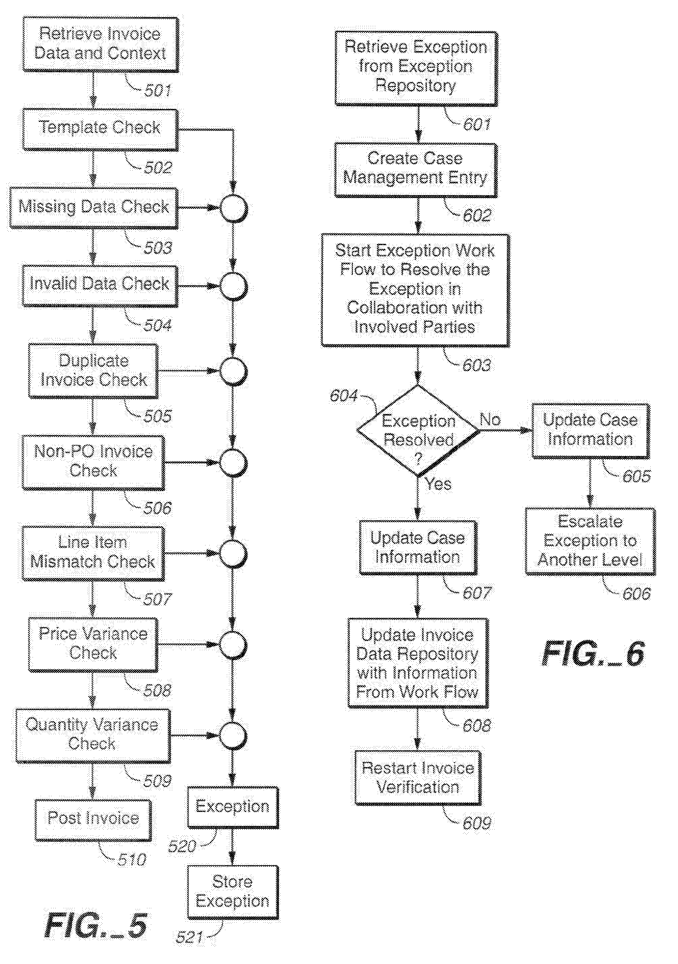

Fig. 5 illustrates a method verifying an invoice according to another embodiment of the present invention. At 501, invoice data is retrieved from the invoice data repository. Context information may also be retrieved. One advantage of this embodiment is that an invoice will be automatically posted without user intervention if the system can verify that the invoice data meets numerous predefined criteria. For example, the system may use the invoice data to perform a template check 502, a missing data check 503, an invalid data check 504, a duplicate invoice check 505, a non-purchase order check 506, a line item mismatch check 507, a price variance check 508 and a quantity variance check 509. Other verifications may also be included such as an authorization check, missing goods received ("GR") check and/or a missing service entry ("SE") check. If all of the invoice data is verified, then that invoice is posted at 510. If any of the checks are not successful, then an exception is created at 520. The exception may be stored in an exception repository at 521 for later access by a user.

Fig. 6 illustrates a method of resolving an exception according to another embodiment of the present invention. At 601, the data associated with the exception is retrieved from an exception repository. At 602, a case management entry may be created to facilitate automated tracking of each exception. In some embodiments, the case management entry may be created by the invoice processor when an invoice fails a verification check and the exception is created (i.e., prior to step 601). At 603, one of a plurality of different exception work flows (i.e., exception handling procedures) may be initiated to resolve the exception. Embodiments of the present invention may include a variety of different exception work flows. In one embodiment, different work flows may be started based on the type of error that triggered the exception. In other words, the particular exception handling procedure initiated by the system may be based on the particular verification check that the invoice failed. For example, a failed duplicates check may lead to a different work flow than a failed template check or failed missing data check. These exception work flows may require collaboration with other involved parties, such as one or more of the vendor's employees or one or more of the company's employees. Exception work flows may also be role based so that the system controls who is contacted to resolve different types of problems. Additionally, the system may control how users are contacted (e.g., over email, through a web portal or through an "Inbox" described below). Moreover, the system may control the information each user receives. Some exceptions may require only a subset of the invoice data for resolution. The information may be filtered based on the type of exception or the role of the user (i.e., some users may not require certain invoice data to resolve an exception). At 604, the system determines whether or not the exception was resolved. If the exception is not resolved, case information is updated (e.g., in the case management database) at 650. At 606, the exception may be escalated for further processing (e.g., by alternate work flows or human intervention). If the exception was resolved, the case information is updated at 607 and the invoice data repository is updated at 608 with information obtained as a result of the exception work flow while possibly changing the status of the invoice. At 609, the invoice verification may be restarted. Alternatively, if the verification process detects multiple invoice errors, multiple exceptions may be processed and resolved in parallel.

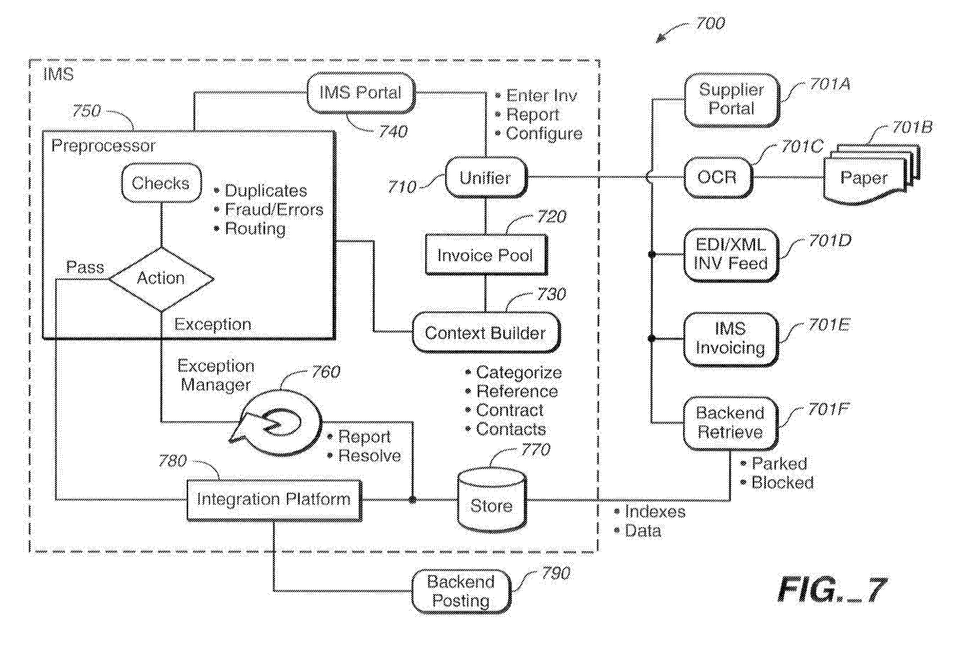

Fig. 7 illustrates an invoice management system 700 according to another embodiment of the present invention.

Invoice management system 700 ("IMS") includes a unifier 710, invoice data repository 720, context builder 730, IMS portal 740 (e.g., a web based interface), invoice processor 750 (sometimes referred to as a "preprocessor" because it is performing the processing prior to posting), exception manager 760, STORE 770 (which may represent a plurality of different databases used by the IMS for different purposes), and an integration platform 780. Invoices may be received electronically from a supplier portal 701A (e.g., a specific portal for registered vendors), paper invoices 701 B (e.g., invoices that have been processed by an optical character recognizer 701C), an EDI or XML feed 701 D, IMS invoicing 701 E (e.g., a manual entry component of the IMS), or a backend retrieval system 701 F (e.g., a component that retrieves the invoice data from other proprietary systems). Unifier 710 receives incoming invoice data from a plurality of different sources and in a plurality of different formats and transforms the data into a common format. The transformed invoice data is then stored in invoice pool 720 (e.g., an invoice repository). Context builder 730 automatically retrieves additional information corresponding to each invoice. Context builder 730 may associate a category, references, contacts, contracts or histories with each invoice data entry. Invoice processor 750 automatically verifies each invoice. For example, invoice processor may perform checks for duplicates, fraud or a variety of other checks including those disclosed above and shown in Fig. 5. Invoice processor 750 then forwards the invoice for further processing including posting the invoice if the invoice passes verification or creating an exception if the invoice fails verification and triggers an exception. Exception manager 760 automatically manages exceptions. Integration platform 780 allows the IMS system to interface with other software systems, such as a backend posting system 790 or third party financial or related legacy systems (not shown), and provides for communications between individuals using email, for example.

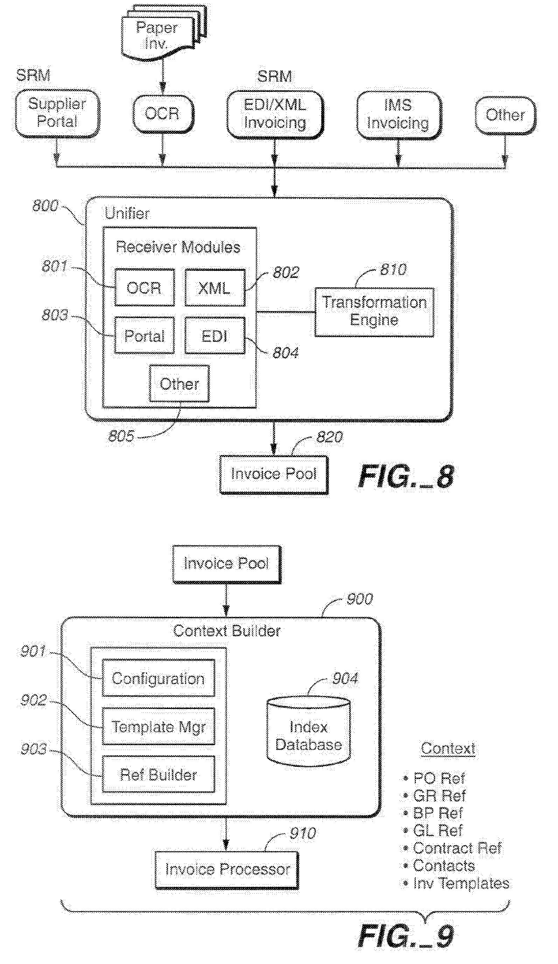

Fig. 8 is an example of a unifier according to one embodiment of the present invention. Unifier 800 converts different incoming invoice data formats into one common format and stores the data in invoice repository (i.e., invoice pool) 820 for use in later processing steps. In one embodiment, invoice repository may be used as a temporary storage area for queuing invoice data prior to verification in the invoice processor. Unifier 800 may include different software components (i.e., receiver modules) for receiving data from different sources (e.g., external sources). Receiver modules may include software for receiving invoices from an optical character recognizer ("OCR") 801, XML 802, Portal 803, EDI 804 and other components for receiving data from other sources represented by module 805 ("other"), which may include customizable receiver modules that may be created and customized dynamically to meet different user requirements. Unifier 800 may further include a transformation engine 810 for transforming the invoice data into a common format. Alternatively, each receiver may be responsible for applying the appropriate transformation and produce invoice data in the preferred common format, which is then stored in the invoice pool 820. In one embodiment, if a received input data is incorrect and cannot be transformed by the corresponding receiver, then error messages are generated and the input is ignored. On the other hand, if the input is successfully transformed, then an acknowledgment may be generated indicating that the input was received and is pending verification. Additionally, embodiments of the present invention may log the status of each received invoice to support status checking.

Fig. 9 is an example of a context builder according to one embodiment of the present invention. Context builder 900 provides additional information to invoice processor 910 and exception manager (not shown) that is relevant to verification and exception resolution. The context builder may access a variety of other systems including backend systems. Context builder 900 includes a configuration software component 901, a template manager software component 902, and a reference builder software component 903. The context builder may include, or be coupled to, an index database 904 for accessing context information. Configuration 901 may indicate to the IMS system what other systems to access, how to access such systems and what information to retrieve. For example, configuration component 901 may include information about what other systems are available within a company for accessing context (e.g., an employee database, vendor database or financial application to name just a few possibilities). Configuration component 901 maintains certain information that may be required in order to gain access to the information in these other systems, such as security information, passwords, user ID, addresses or related information. Configuration component 901 may also control what information needs to be retrieved from each system. Reference builder 903 accesses configuration component 901 and builds an index database 904 for accessing the context information.

Exemplary context information may include document context, organizational context and people context. Document context may include the purchase order associated with an invoice, the requisition upon which the purchase order was based, the blanket order (e.g., a contract) that the purchase order refers to or relates to, goods receipts associated with the invoice, service confirmations, payment information for invoices that have been posted, prior invoices for the purchase order associated with the invoice, advanced shipment notifications associated with the invoice, bills of lading for goods received or links to scanned versions of all such structured or unstructured documents. Organizational context may include the purchasing group responsible for the purchase order, the purchasing organization, the plant(s) referred to in the line items of the purchase order, the cost centers, projects, work orders or assets for which the purchase order was created, for example. People context may include the purchasing agent, the supplier contact for the purchase order, the requisitioner, the receiving clerk, the person responsible for the cost center, project, work order, or asset, or the accounts payable clerk that processed a previous invoice.

The context builder may be used to autopopulate invoice data, i.e. fill data fields in the invoice data. First, the system may search an incoming invoice for a purchase order number. From the purchase order number, the system may use the index database to access the PO. From the PO, the system searches for the purchase requisition ("PR"), and from the PR the system can acquire the requisitioner. Once the system knows the requisitioner, the system can search for the requisitioner's cost center by accessing employee reference (e.g., an human resources database) and populate the cost center automatically. For an approval workflow, the system searches for hierarchical information for the requisitioner's organization and send email to his manager automatically. Of course, the above described process is just one example of how autopopulation may be carried out. Autopopulation algorithms and rules may be defined and altered in accordance with different system requirements. Thus, context may be gathered from across a wide range of information sources, and the information from one or more sources may be used to access yet further information to gather relevant context and autopopulating the data fields of the invoice.

Particular embodiments of the present invention also support invoice templates, which may be managed by template manager 902. Invoice templates allow a user to define characteristics of incoming invoices (e.g., for a particular vendor) based on historical transactions. An invoice template may include a collection of characteristics that a user may look for when an invoice enters the system. Invoice templates may include a plurality of fields that have predefined values (e.g., the vendor's name, identification number, address or other characteristics relating to that vendor that do not change from invoice to invoice). As invoices enter the system, a template (e.g., corresponding to a particular vendor) may be accessed and compared to the incoming invoice. When a template field has a value, each incoming invoice must have that same value in the corresponding field. For example, when an invoice is received and transformed, the system may determine who is sending the invoice by examining the name and/or vendor number. Next the system may access a template corresponding to the particular vendor and compare one or more templates to the invoice. By comparing the templates predefined characteristics of the invoice to the incoming invoice, the system can determine whether or not there is a variance in an incoming invoice from previously received invoices. Embodiments of the present invention also include templates having one or more fields with a range. In this case, when an invoice is compared against the template, the value of the field in the invoice must be in the range specified in the template. Templates may also include lists of values (e.g., multiple addresses). In this case the invoice must have a value from the template list in a corresponding invoice field.

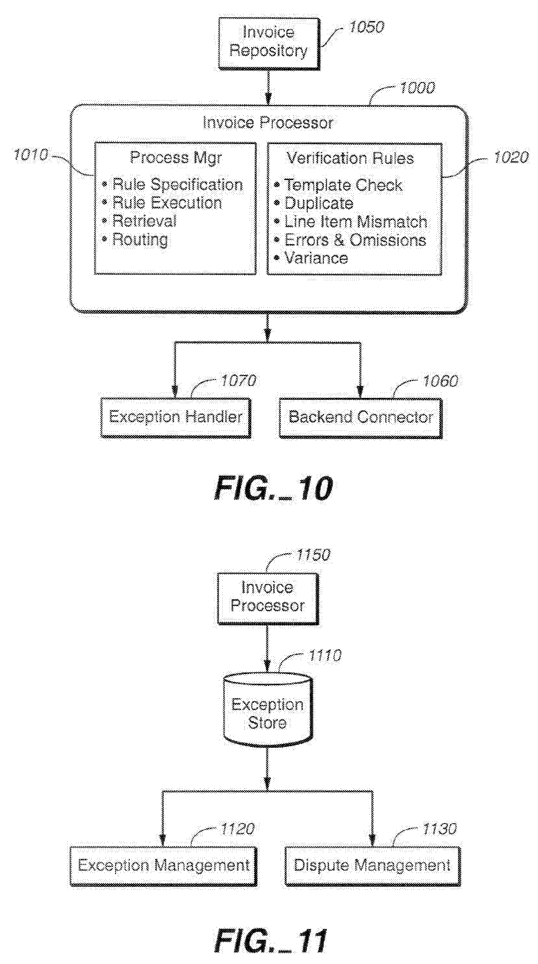

Fig. 10 is an example of an invoice processor 1000 according to one embodiment of the present invention. Invoice processor 1000 consumes invoices from invoice repository 1050. Invoice processor 1000 retrieves invoices from the repository and executes verification rules. Invoice processor 1000 then creates exceptions if verification is unsuccessful, or posts the invoice if the verification is successful. Invoice processor 1000 may use the context builder to retrieve context information associated with the invoice to facilitate the verification process. During verification, invoice processor 1000 executes a set of verification rules. In one embodiment, the verification rules may be specified by a user (e.g., a company employee responsible for invoice processing rather than a programmer), including reconfiguring rules, activating or deactivating rules or specifying additional rules as desired. Invoice processor 1000 then determines the proper routing of the invoice based on the results of the verification. For example, if the verification is successful, invoice processor 1000 may route the invoice to a backend posting system 1060 automatically. If one or more of the verification rules is not met, invoice processor 1000 may create an exception and route the invoice according to exception work flow rules. In one embodiment, the exception work flow rules and/or exception handling procedures may also be specified by a user.

In one embodiment, invoice processor 1000 includes a process manager 1010 and verification component 1020 (sometimes referred to as an "exception inspector"). Process manager 1010 allows users to specify verification rules and exception work flow rules and handling procedures, retrieves invoices from invoice repository 1050 and controls the routing in accordance with the specified rules and procedures. Verification component 1020 executes the rules on each invoice as they are retrieved from the repository 1050. Verification component 1020 may provide a list of checks applicable to an incoming invoice and the order of execution, and apply the checks to each invoice. Details of verification failures may be returned and stored for further analysis or use. Verification component 1020 allows for configuring each check as specified by a user, and may support activation or deactivation of each check as desired by a user. In one embodiment, all exceptions occur before the data in a backend system is changed by the invoice posting so that rollback is not an issue until the invoice gets posted. Embodiments of the present invention may include some or all of at least the following verification checks:

Template Check

Invoice data is compared to a template that has been setup by the party receiving the invoice. Example: If the template has been defined such that the PO number field is required and vendor must be "SAP," and the system receives an invoice with PO Number blank and vendor "SAP," then this check fails.

Missing Data Check

The invoice and its context are checked to see if it contains all mandatory information. If invoice date, invoice amount and vendor name have been specified in the verification rules as mandatory, then if any one of these fields is blank, this check fails.

Invalid Data Check

The information provided in the invoice does not conform to standards or does not exist in the system (e.g., a unit of measure should confirm to a standard, date is not in the correct format, a tax distribution is not as specified by the company, the vendor is new and does not exist in the system, PO number does not exist in company's system, the requisitioner is not an employee of the buying organization,

Duplicate Invoice Check

The incoming invoice and its context are compared with existing invoices. The criteria for what fields are compared and whether an exact match or a fuzzy match is used may be configurable.

Non-PO Invoice Check

If the incoming invoice has no PO then the system may initiate a predefined "approval" workflow, which may route the invoice to the cost center manager, for example.

Line Item Mismatch Check

The system cannot match the PO Line Item to the Invoice Line Item (e.g., the descriptions on line items of the invoice and the PO do not match).

Price Variance Check

Detects differences in pricing between expected prices specified in a PO and the actual price indicated in the invoice received from the supplier. Example cases include: item price has changed, negotiated discounted price was not applied, freight charges are not specified in PO but appear in invoice, incorrect tax applied, etc. Price comparisons may be done at the item level as well as total gross amount. Prices may be compared using a configurable tolerance factor specified as a percentage or absolute value rather than for exact equality (e.g., price in invoice must be within 2% of price in PO, or within $1 of expected price).

Quantity Variance Check

Quantity variance can occur when the invoice comes in before the goods are shipped, when the good are received but the GR clerk hasn't yet entered then into the system or when the goods are received but the quantity received does not match invoice quantity.

Fig. 11 is an example of an exception manager according to one embodiment of the present invention. The exception manager component provides the ability to act on exceptions detected on incoming invoices by the invoice processor. Invoice processor 1150 is coupled to exception store 1110 (e.g., an exception repository such as a database). Exception store 1110 stores information corresponding to exceptions. When verification of an invoice is unsuccessful, the invoice may be forwarded to exception store 1110. In one embodiment, exceptions may be captured as cases stored in exception store 1110, and actions taken to resolve an exception may be recorded under each case. An example specification for one possible implementation of an exception store is provided below. Exception manager 1120 provides tools for supporting exception resolution. In one embodiment, exception manager 1120 controls the work flow for resolving exceptions. One advantage of the present invention is that exception handling procedures controlled by exception manager 1120 may be customized by a user. Thus, a user may specify the procedures for resolving an exception. Such procedures may include specifying the individuals involved in resolving the exception, specifying routing procedures, specifying roles, specifying what data is to be retrieved, specifying how the data is to be retrieved, specifying alerts, specifying time-outs, specifying elevation criteria, specifying invoice approval criteria or rejection criteria, specifying rejection protocols or specifying fraud detection and prosecution protocols.

As mentioned above, in some embodiments the exception manager may be role based (i.e., exception manager determines at least some of the users involved in a exception handling procedure). Moreover, in some embodiments the exception manager may determine how particular users are contacted (e.g., email, etc....), when particular users are contacted (i.e., according to exception handling rules) and what information such users receive. Thus, embodiments of the present invention may include storing role information (e.g., exception handlers job information), communication information, exception routing rules or data filtering rules to facilitate more efficient exception handling.

In one embodiment, exception manager 1120 provides an "Inbox" user interface. The Inbox and the data retrieved and displayed in the Inbox may be automatically modified based on different user roles. A user may select one invoice from a list and drill-down to see the invoice data and particular exception for the invoice of interest (e.g., header and line item information). Context information such as purchase order, vendor, related invoices, goods receipt, contacts, attachments and case history are accessible either directly in the exception store or through a reference to another repository. Exception manager 1120 may be coupled to an index database (not shown) to allow a user to search through invoices or to manually search for additional information about an invoice. Exception manager 1120 may also provide filtering for inbox management. For example, a user may apply a filter to reduce the number of invoices shown in the Inbox and focus on specified subsets of exception cases. Exception manager 1120 may also support posting, deleting, editing and forwarding of invoices as required for exception handling, or the ability to email or chat with contacts concerning particular exception cases. Exception manager 1120 may further track the history of an invoice so different participants can gain a full understanding of the history of each case. In one embodiment, after an invoice is processed by the exception manager and the exception resolved, the invoice processor performs the verification on the invoice again. Dispute management component 1130 may be integrated into exception manager 1120 or operate as a stand alone component providing work flows and data access for resolving disputed invoices.

The following are example procedures for resolving exceptions, i.e., exception handling procedures, corresponding to the above-mentioned verification checks.

Template Exception Handler

If a template check fails then the system may highlight the fields that made the template check fail and allow the user to correct the invoice or forward the invoice to another contact for resolution.

Missing Data Handler

If the requisitioner information is available then the invoice is routed to the requisitioner through an email form. The requisitioner can then attempt to fill up the data or send it back to the vendor or any other contact who might have this information. The system may search the context information and provide suggestions to the user.

Invalid Data Handler

When the invoice does not adhere to standard formats, the invoices are sent back to the vendors for correction.
When the vendor does not exist in the system, a work item is sent to the purchasing officers Inbox. He can then open the item, look at the invoice and its context, create the vendor and resolve the open item.
When the PO number specified in the invoice does not exist in the system, an interactive form is sent to the requisitioner via email, he can then correct the PO number or forward the exception to the vendor for resolution.
When errors like date mismatch, tax distribution problems or requisitioner not found occur, the vendor is directly notified of the problem through an interactive form.

Duplicate Invoice Handler

The original invoice and the duplicate invoice are displayed side by side to a user such as an AP clerk. He can then decide to reject or accept the new invoice. If he rejects the invoice an email is sent to the vendor with the complete context of the two invoices and their scanned images. The vendor can dispute this duplicate if needed.

Non PO Authorization Handler

The cost center of the requisitioner is checked and the invoices forwarded to his manager for approval. The invoice is sent through email as an interactive form and authorization is through a digital signature.

Line Item Mismatch Handler

The invoice line items and the PO line items are displayed side by side, and a user such as an AP clerk can select the appropriate line item in the invoice that matches the PO. If he cannot make this decision then he can forward this exception to the requisitioner for resolution.

Price Variance Handler

If the price on the PO is incorrect, a user such as an AP Clerk may change the PO pricing. If the price variance is above the limit then approval by an AP Manager may be needed before accepting Invoice. Limits may be configurable. If pricing in an invoice is not correct then allow the system to send the invoice back to the vendor.

Quantity Variance Handler

If the invoice comes in before the goods are received, the exception handler does not process this invoice for a certain number of days. The number of days the system will "WAIT" may be configurable. Once this time frame has passed, and if the good still haven't been received, a work item is sent to the GR clerk for verification. The GR clerk can then forward this exception to the vendor for resolution. If the goods have come in, the GR clerk can confirm his work item as received. If the quantity received doesn't match the invoice quantity then the AP clerk is given the option of short payment, in which case he can pay for the goods already received and notify the vendor of the same.

EXAMPLE USER INTERFACES AND WORK FLOWS

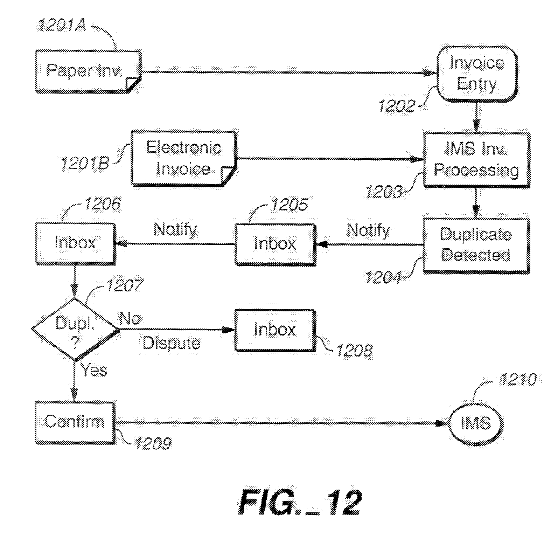

Fig. 12 is an example process flow for resolving an exception according to one embodiment of the present invention. The present example illustrates the handling of a duplicate invoice. A duplicate exception will typically occur when an invoice is received by a company from a vendor and entered into the invoice management system, and then another invoice is received with the same or substantially the same information (e.g., the same vendor bills twice for the same goods or services). In one embodiment, invoice data and context information for each invoice may be automatically compared against existing invoices to detect a duplicate (e.g., in an invoice processor during a verification as described above). Embodiments of the present invention allow a user to configure the matching criteria used to detect duplicates. For example, a user may specify the particular portions (e.g., fields) of invoice data or context to be compared. A user may further specify whether exact matching is required or whether non-exact matching (e.g., "fuzzy") matching is to be used to detect duplicates.

At 1201A, a user ("U1") employed by a vendor mails or faxes a paper invoice to the company buying the vendor's goods or services. At 1202, the company receives the invoice, and another user ("U2") may enter the invoice data into the system using an invoice entry software component. Alternatively, invoice data in electronic form at 1201 B can be transmitted automatically to an invoice management system. At 1203, the invoice data is processed by the invoice management system. At 1204, the system detects a possible duplicate and sends a notice to U2 or another user ("U3") employed by the company (e.g., in a different department) along with the invoice data, information from the context builder and suggested actions. For example, the notice may appear in an "Inbox" as described in more detail below. U2 may review the information and determine that it is in fact a duplicate. U2 may then quickly mark the duplicate for deletion and automatically transmit an electronic notification to U1. The electronic notification may include some or all of the invoice data, invoice context information and an electronic form. At 1206, the electronic notification is received by U1 (e.g., in an "Inbox"). When U1 receives the notification, the information can be reviewed quickly and the duplicate can be confirmed or disputed quickly as shown at 1207 by means of corresponding response signals. If the duplicate is confirmed at 1209, it may be routed to invoice management system at 1210 and automatically deleted with no further user interaction. If U1 disputes that the invoice is a duplicate, a response signal in the form of a dispute signal may be sent to U2 for further processing.

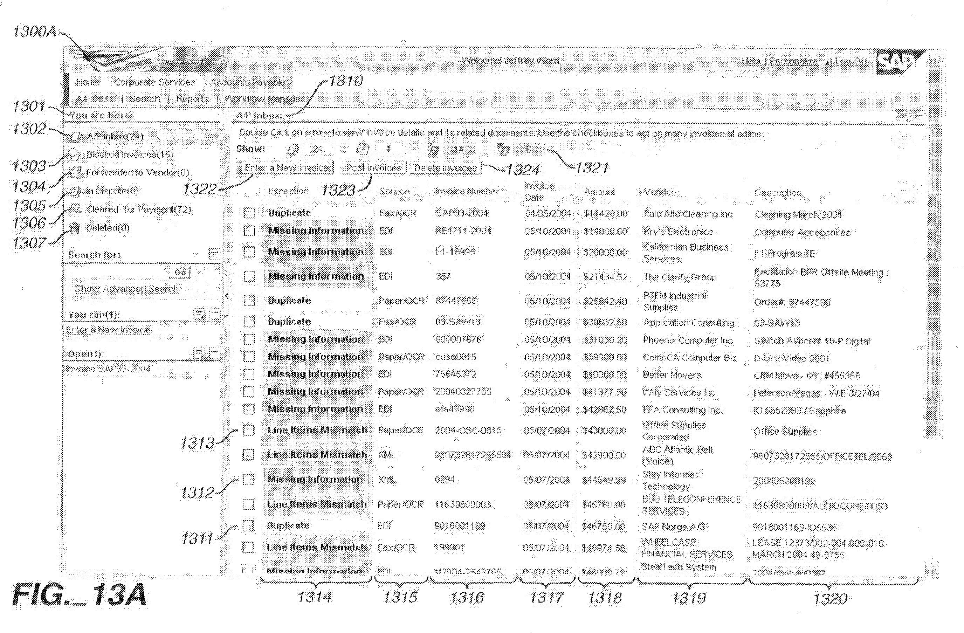

Fig. 13A is an example of a graphical user interface ("GUI") 1300A for managing invoice exceptions according to one embodiment of the present invention. The present example illustrates a GUI that may be used for managing duplicate invoices, invoices with missing information or line item mismatches. A variety of information stored in an invoice management system may be retrieved and presented to a user for efficient management of invoices. For example, a portion of GUI 1300 labeled "You are here" 1301 is used to display status categories and summary information (i.e., the number of invoices in a category) for invoices in the system. Such information may include the number of invoices in an accounts payable inbox ("A/P Inbox") 1302, the number of blocked invoices 1303, the number of invoices forwarded to a vendor 1304, the number of invoices in dispute 1305, the number of invoices cleared for payment 1306 and the number of deleted invoices 1307.

Exceptions may be presented to a user in the form an "inbox" (i.e., an exception inbox) 1310. Exception inbox 1310 may include one or more rows each corresponding to an exception such as "Duplicate" 1311 indicating the existence of a potentially duplicative invoice, "Missing Information" 1312 indicating that an invoice has been received without certain information, and "Line Item Mismatch" 1313 indicating that one or more line items on the invoice (i.e., information about individual items purchased from the vendor) do not match up with line items in the invoice management system (e.g.,

information about individual items requested in a purchase order). The exceptions may be color coded so that each exception is displayed in a different color. A user may access and process an exception by selecting one of the exception row entries (e.g., by double-clicking on a row entry with a mouse).

Invoice data and context information may be displayed as fields (i.e., columns) for each exception in an Inbox. For example, the first field 1314 may indicate the type of exception. Invoice data displayed with each exception may include the "source" of the invoice 1315 (e.g., Paper/OCR, Fax/OCR, EDI, XML), "invoice number" 1316, "invoice date" 1317, invoice "amount" 1318, "vendor" 1319 and a "description" 1320, for example. Other invoice data or context information may also be displayed. Inbox 1310 may include a display of summary information 1321 including the total number of invoices in the "inbox," and the number of each type of exception. Inbox 1310 may allow a user to enter a new invoice (e.g., using electronic button 1322), post invoices 1323 or delete invoices 1324.

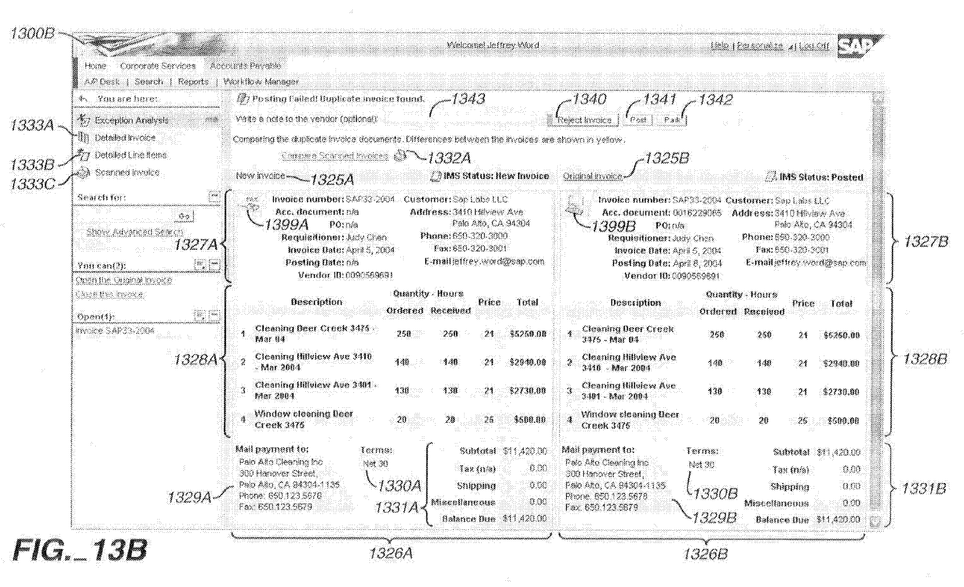

Fig. 13B is an example of a graphical user interface ("GUI") 1300B for managing duplicate invoice exceptions according to one embodiment of the present invention. In response to selecting a duplicate exception in GUI 1300A, the invoice management system retrieves invoice data corresponding to both an original invoice and the duplicate (i.e., the new invoice). The invoice data may be displayed together in a single GUI 1300B. In one embodiment, the original invoice data 1325B and the duplicate invoice data 1325A are displayed side by side at 1326A and 1326B. The data may be also displayed side by side in "invoice format" (i.e., displaying the invoice data using the same visual format as a paper invoice, wherein invoice data is divided into a plurality of groups and one group is displayed as entries and at least one other group is displayed in tabular form in a different portion of the display). Furthermore, the system may compare each invoice data field in invoice 1325A to the corresponding field in invoice 1325B. If the fields do not match, the system may flag those fields and highlight non-matching fields in the display, for example.

For example, both the original invoice 1325B and the new invoice 1325A are displayed side by side at 1326A and 1326B for easy comparison. Invoice displays 1326A and 1326B may include icons 1399A and 1399B indicating the source of the invoice. For example, icon 1399A may display a graphic indicating that the source of the invoice was a facsimile (i.e., "FAX"). Similarly, icon 1399B may display a graphic indicating that the source of the invoice was electronic (e.g., an image of a computer). Additionally, invoice displays 1326A and 1326B may include the following invoice data grouped and displayed as entries in the upper portions 1327A and 1327B: invoice number, an accounting document number ("Acc. document"), purchase order number ("PO"), the name of the "Requisitioner," invoice data, posting date, vendor identification, customer name, customer address, customer phone number, customer fax, and the user's email. The following invoice data is grouped and displayed side by side in tables 1328A and 1328B: "Description," quantity or hours ordered, quantity or hours received, price or rate, and total for a plurality of line items. The following invoice data is grouped and displayed side by side: payment mailing information 1329A and 1329B (e.g., the name, address, city, state, zip code, phone number and fax number of the vendor), the terms of payment 1330A and 1330B (e.g., "Net 30"), and tables 1331A and 1331 B including subtotal, tax (if any), shipping costs, miscellaneous expenses and balance due.

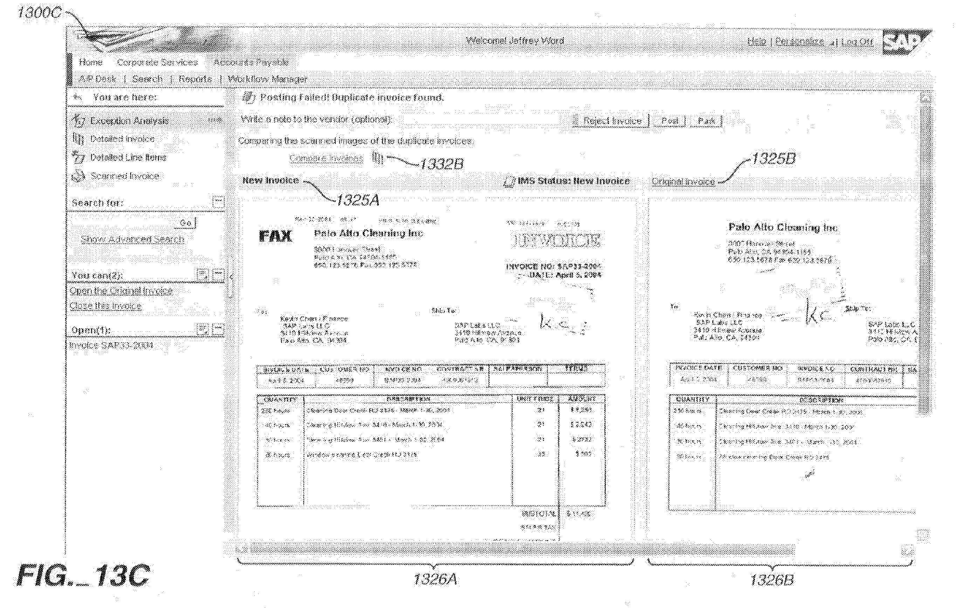

GUI 1300B further includes features for retrieving and displaying other important information useful for streamlining the management and processing of invoices. For example, invoice management system may retrieve and display detailed invoice information, detailed line item information or an image of an invoice if a user selects "Detailed Invoice" 1333A, "Detailed Line Items" 1333B or "Scanned Invoice" 1333C, respectively. In one embodiment, a user may also retrieve and display scanned invoices by selecting link 1332A ("Compare Scanned Invoices"). Fig. 13C illustrates scanned images of both the original invoice and the new invoice displayed side by side for comparison. If images are available, GUI 1300C will replace the invoice data displayed in invoice format at 1326A-B with the images as shown at 1326A and 1326B in Fig. 13C. Easy one-click access to and comparison of the scanned invoices reduces the time required for analyzing and resolving duplicates. A user may return to GUI 1300B by selecting link 1332B, which may display "Compare Invoices" for example.

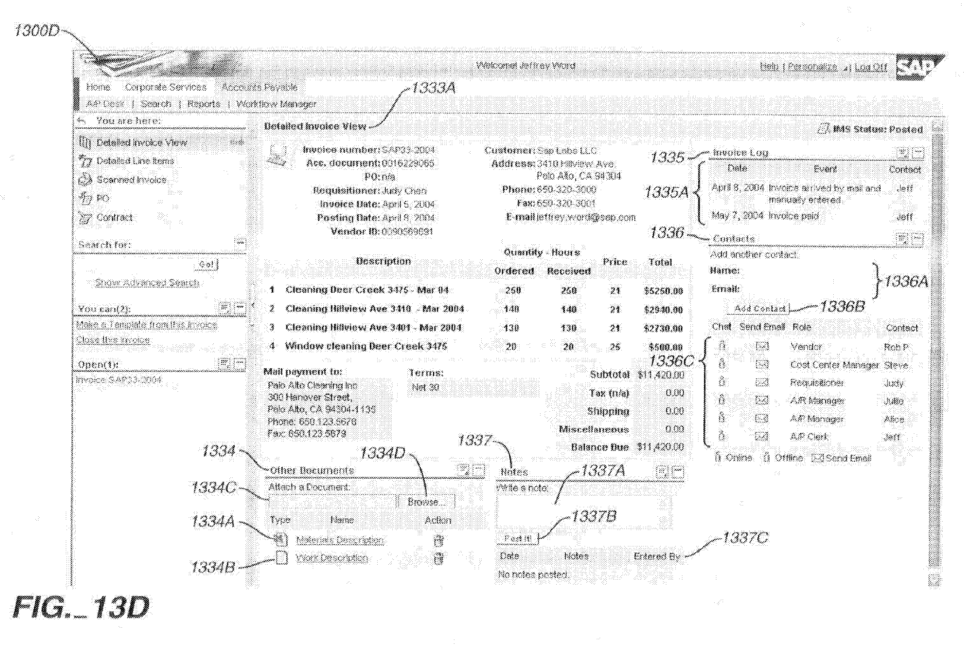

A user may access yet more information about an invoice by selecting "Detailed Invoice" view (e.g., by accessing link 1333A in Fig. 13B). In response to a user selecting "Detailed Invoice," the system retrieves and displays additional invoice data and context information. Fig. 13D is an example of a graphical user interface ("GUI") 1300D that displays a detailed invoice view according to one embodiment of the present invention. Detailed invoice view 1333A (Fig. 13D) may include all the information accessed and displayed in 1326A or 1326B (Fig. 13B) and further include documents relating to the invoice 1334 ("Other Documents"), an invoice log 1335 ("Invoice Log"), contact information and communication capabilities 1336 ("Contacts") and notes associated with the invoice 1337 ("Notes").

Invoice log 1335 may be used to track the event history of the invoice. For example, invoice log 1335 may include the date, event and name of the person involved in the event. This information is displayed at 1335A. Furthermore, "Other Documents" 1334 may include accessing a variety of documents relating to the invoice, such as a materials description 1334A, a work description 1334B or other related documents such as a contract pertaining to the invoice, for example. Since a variety of users may access the invoice during processing, different users may attach different relevant documents so that relevant documentation pertaining to the invoice is readily available for access and review through GUI 1300D. Documents may be attached by typing in the name of the document at 1334C or browsing the network and selecting particular files using the "Browse" feature 1334D.

Different users may attach notes to the invoice by typing text into field 1337A. The text may be posted by selecting "post it" 1337B, for example. A list of notes may be displayed at 1337C along with the date the note was posted ("Date"), the text ("Notes") and an identification of the user who entered the note ("Entered By").

In one embodiment, an invoice management system includes an integrated communication system that allows different users to correspond about invoice issues. For example, a user may correspond with contacts automatically using "Contacts" 1336. Additionally, a user may enter contact information corresponding to each invoice. For example, at 1336A, a user may enter a contact's name or email or both. The contact is added to the system by selecting "Add Contacts" 1336B. The contacts associated with the invoice are listed at 1336C along with "Role" and name (i.e., "Contact") fields. Roles may include vendor or company groups such as requisitioner, cost center manager, A/R manager, A/P manager or A/P clerk, for example. A user may correspond with a contact by creating a new email message, chat session or other electronic communication.

Referring again to Fig. 13B, when a user has completed the review of a duplicate, the user may either reject the alleged duplicate invoice by selecting "Reject Invoice" 1340, allow the alleged duplicate to be posted by selecting "Post" 1341 or by selecting "Park" 1342 (i.e., sending the invoice to a financial application as a "parked" invoice). In one embodiment, when a user rejects an invoice the IMS system automatically generates a notification and transmits the notification to the vendor. Additionally, a user may include a note to the vendor with the notification by entering text at 1343.

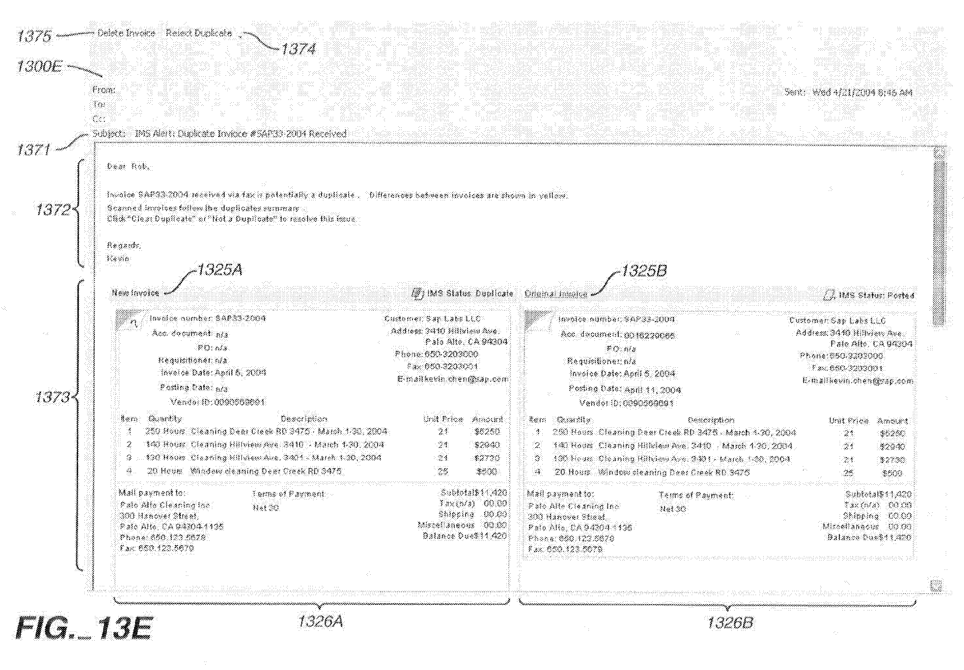

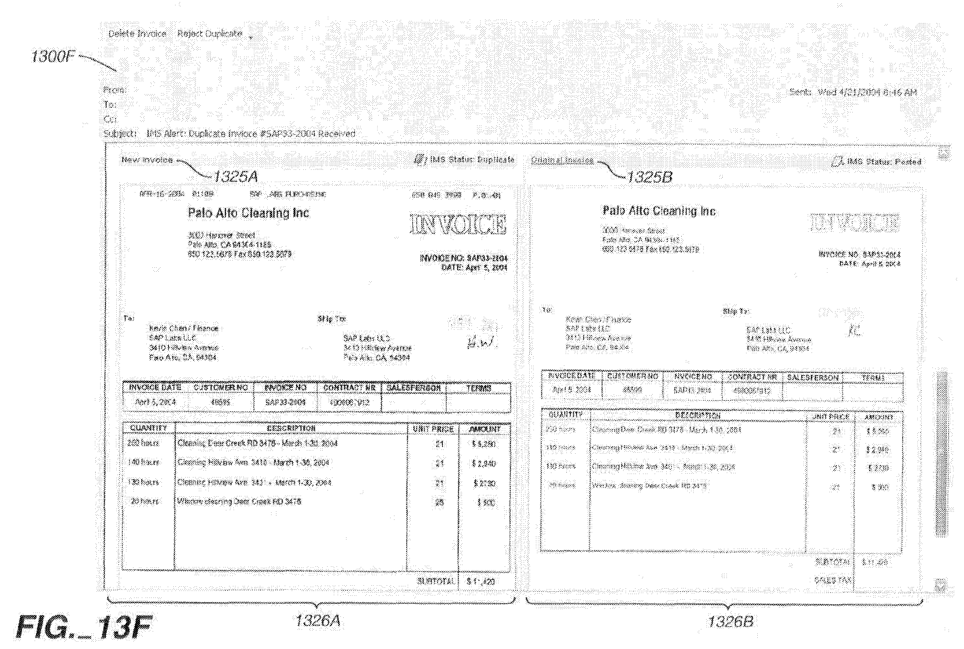

Fig. 13E illustrates an example notification 1300E received by a vendor. GUI 1300E includes an original invoice 1325A with invoice data displayed at 1326A. GUI 1300E also includes a potentially duplicative invoice 1325B with corresponding invoice data displayed at 1326B, which may be displayed side by side with the original invoice data as shown. GUI 1300E may further include a text message 1372, which may include automatically generated text and/or user specified text entered as a note to the vendor at 1343 of Fig. 13B, for example. The vendor may also be provided with the ability to automatically confirm or dispute the duplicate. For example, the notification may include an integrated response, such as "confirm" or "dispute." In one embodiment, the notification is in the form of an email and GUI 1300E is displayed by an email system. The email system may receive an IMS Alert regarding the invoice with a subject line "IMS Alert: Duplicate Invoice," for example. When a user opens the IMS Alert, invoice data and a text message may be displayed, and a confirmation response selector 1374 and dispute response selector 1375 may be presented to a user. Response selection may be implemented using electronic buttons, menu items, links or equivalent techniques. A user may confirm that invoice 1325A is a duplicate by selecting "Delete Invoice" 1375. A response signal is automatically sent to the invoice management system, and the invoice is deleted. Alternatively, a user may dispute that invoice 1325A is a duplicate by selecting "Reject Duplicate" 1374. In this case, a response signal will be automatically sent to the Inbox of a user at the company for further processing and resolution. In one embodiment, notification 1300E includes images of the original invoice 1325B and the alleged duplicate 1325B. Fig. 13F illustrates an example email notification 1300E received by a vendor including an image of the original invoice displayed at 1326B and an image of the alleged duplicate displayed at 1326A.

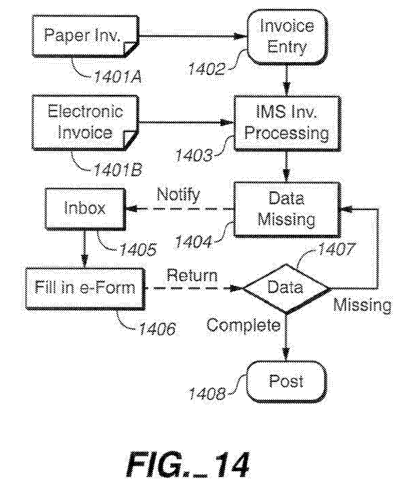

Fig. 14 is another example process flow for resolving an exception according to another embodiment of the present invention. The present example illustrates the handling of an invoice with missing or invalid information (together, "missing information"). At 1401A, a user ("U1") employed by a vendor mails or faxes a paper invoice to the company buying the vendor's goods or services. At 1402, the company receives the invoice, and another user ("U2") may enter the invoice data into the system using an invoice entry software component. Alternatively, invoice data in electronic form at 1401 B can be transmitted automatically to an invoice management system. At 1403, the invoice data is processed by the invoice management system. In one embodiment, invoice data is automatically populated when additional information about the invoice is retrieved (e.g., by the context builder) in order to reduce data entry. At 1404, the system detects missing information and automatically sends an electronic notification to U1 notifying U1 that the received invoice is missing data. The electronic notification may include some or all of the invoice data, invoice context information and an electronic form. At 1405, the electronic notification is received in an inbox, such as an email inbox, for example. U1 updates the invoice data in the electronic notification at 1406. In one embodiment, the system sends U1 an electronic form that U1 can complete or fill in online (e.g., an Adobe® form) and return to the system automatically. At 1407, the updated invoice data is returned to the system and reanalyzed automatically. If information is still missing, the invoice may be rerouted through the process. If the data is complete, the invoice may be posted automatically at 1408.

In other embodiments, an invoice management system may send notifications to different users within the company to resolve the exception. For example, in one embodiment, the invoice management system may send a notification to a requisitioner if requisition information is available. The requisitioner may receive an electronic form, for example, and update the invoice data and return the updated information to the system automatically. The requisitioner may forward the notification to the vendor or other users in the company (e.g., in other departments). In one embodiment, if vendor information is not available, an exception is sent to a user in the company (e.g., a purchasing officer). The user may examine the invoice data and context, assign a vendor and resolve the exception, or forward the notification to another user more likely to have the required information. In another embodiment, when a purchase order specified in the invoice does not exist in the invoice management system, an interactive form may be sent to the requisitioner as a notification (e.g., email). The requisitioner may then correct the purchase order number or forward the exception to the vendor for resolution. Thus, the flexibility of the integrated data and communication techniques of the invoice management system described herein may be used to resolve many different types of invoice exceptions efficiently through streamlined interaction with relevant information holders.

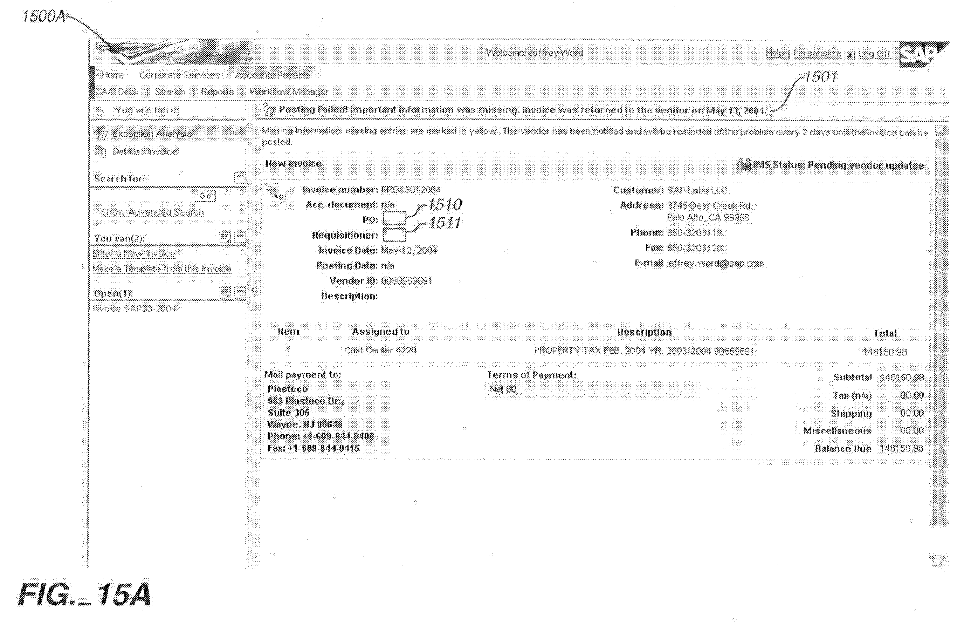

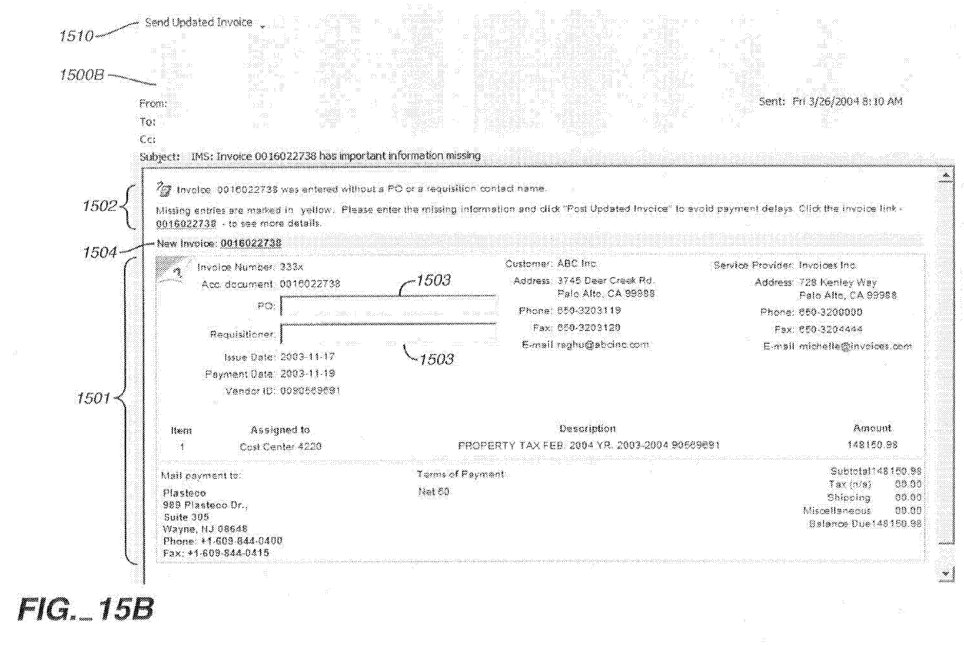

In one embodiment, when a missing information notification is sent to a vendor, an exception is created and a "Missing Information" exception 1312 appears in an exception inbox as shown in Fig. 13. In response to a user selecting "Missing Information" exception 1312, the system retrieves and presents the invoice data for the selected exception in GUI 1500A of Fig. 15. GUI 1500A may include a message 1501 indicating that the posting failed and the system automatically generated a notification to the vendor. Additionally, invoice data may be displayed, and missing invoice data fields (e.g., purchase order number 1510 and requisitioner 1511) may be highlighted.

Fig. 15B illustrates a notification according to one embodiment of the present invention. The notification may be presented to a user in GUI 1500B. GUI 1500B includes invoice data 1501 and message 1502. Invoice data may be presented as a fillable document (i.e., an electronic form that may fields for receiving and storing input data or text) In the present example, the missing invoice data fields are purchase order number ("PO") and requisitioner. A fillable form may include one or more fields for receiving the missing invoice data from a user-vendor. If the user desires more information about the invoice, the user may select link 1504, which may retrieve and present additional information about the invoice including images, for example. The vendor may also be provided with the ability to automatically return the updated invoice information to the invoice management system. For example, the notification may include an integrated response, such as "Send Updated Invoice." Response selection may be implemented using electronic buttons, menu items, links or equivalent techniques. In one embodiment, the notification is in the form of an email and GUI 1500B is displayed by an email system. The email system may receive an IMS email notification regarding the invoice with a subject line including "IMS invoice: important information missing," for example.

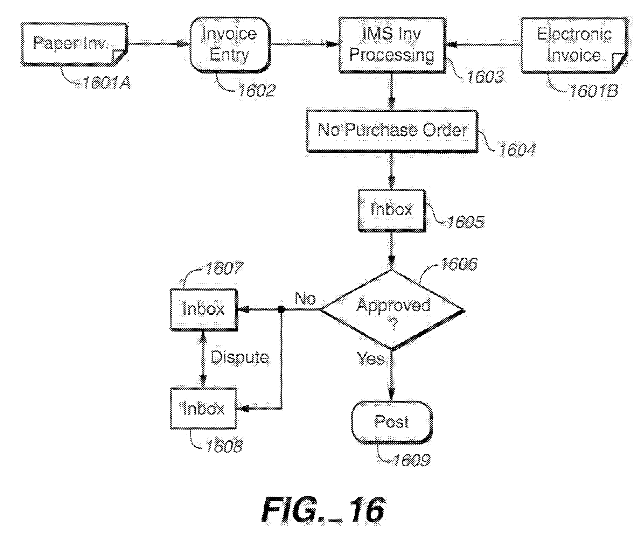

Fig. 16 is another example process flow for resolving an exception according to another embodiment of the present invention. The present example illustrates the handling of an invoice requiring approval before the invoice can be posted. For example, if an invoice has not associated purchase order, payment may require that one or more employees of a company approve the invoice. The present invention streamlines this process, which can be very slow and time consuming when implemented in paper based or non-integrated systems. As previously mentioned, invoice data may be received electronically or in paper form and processed by the invoice management system at 1601A-B and 1603. In one embodiment, invoice data is automatically populated when additional information about the invoice is retrieved (e.g., by the context builder). Autopopulated data may include account information and the person with approval authority, such as a cost center manager, for example. At 1604, the system may determine that approval is required (e.g., no purchase order). When an approval is required the system automatically sends an electronic notification to a company employee for approval at 1605. The system may also create an exception, which may appear in the Inbox of a user in another department (e.g., accounts payable) for tracking the status of the invoice. The electronic notification may include some or all of the invoice data, invoice context information and an electronic form. Additionally, the system may store information indicating that the invoice is blocked until approval is obtained. At 1606, the invoice is approved or rejected. If the invoice is rejected, the invoice data is updated to indicate the rejection. The invoice may then be automatically routed to another user at 1607 to resolve the exception with the vendor. The vendor may also automatically receive a notification of the rejection at 1608. If the invoice is approved at 1606, the invoice is automatically posted at 1609.

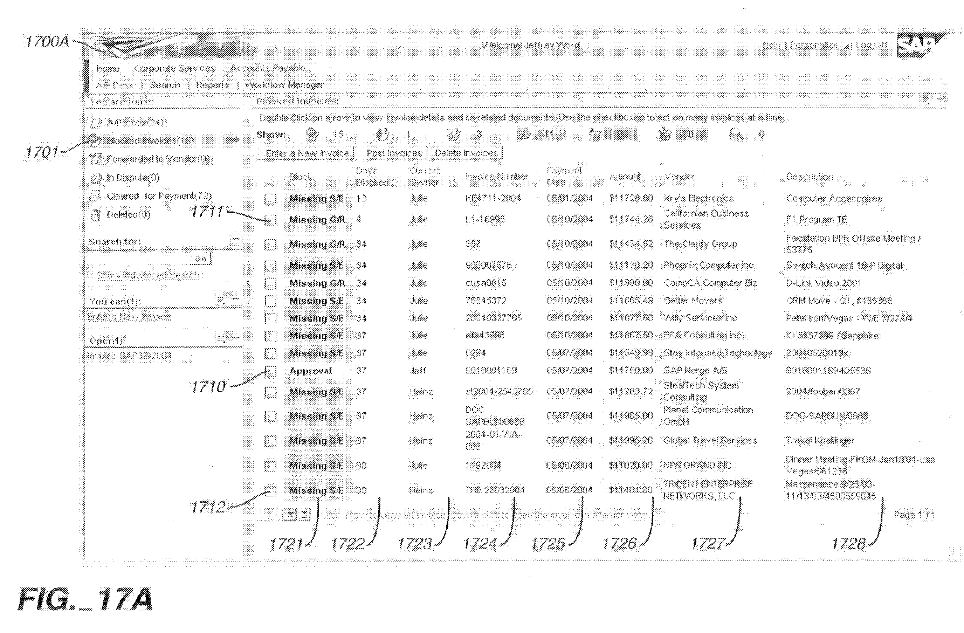

Fig. 17A is an example of a graphical user interface 1700A for managing invoices according to another embodiment of the present invention. Invoices may be "blocked" from payment and displayed to a user in response to selection of "Blocked Invoices" 1701. Blocked invoices may include invoices that require approval 1710, invoices where no corresponding goods were ever received by the company (i.e., "Missing G/R") 1711 or invoices where no services were ever received by the company (i.e., missing service entry, "Missing S/E") 1712. Invoice data that may be retrieved by the system and presented to a user may include the exception causing the block at column 1721 (e.g., approval, missing G/R, missing S/E), the number of days the invoice has been blocked at 1722, the current owner (e.g., the person who's approval is required or who is researching the missing goods or services) at 1723, the invoice number at 1724, the payment date at 1725, the amount due at 1727, vendor information at 1728 and a description at 1729.

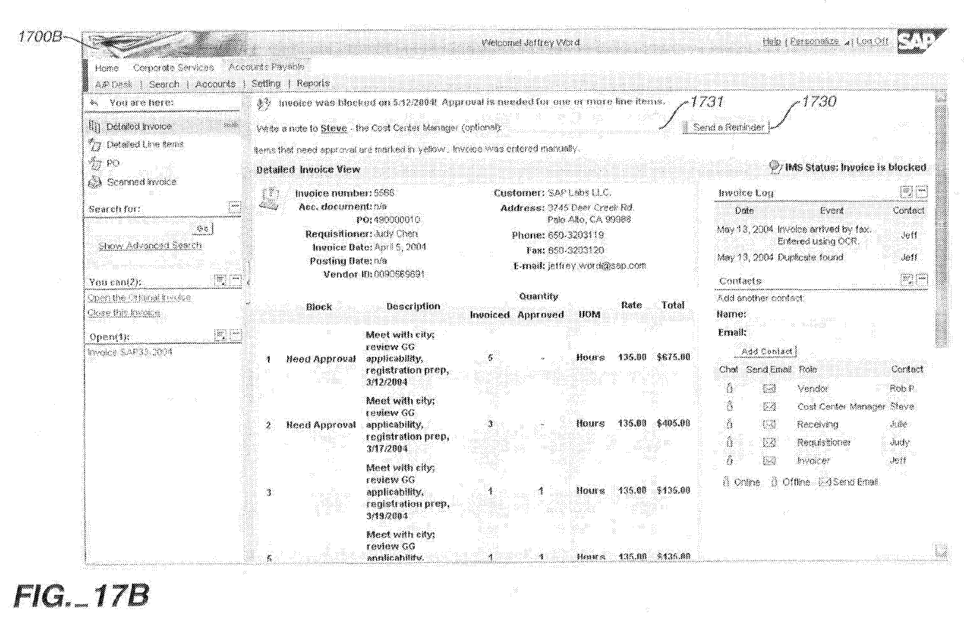

A user may mouse click one of the blocked invoices to obtain a more detailed view. For example, the invoice at 1710 has been blocked waiting for approval for 37 days. A user may mouse click the "Approval" invoice 1710 to obtain more information about the exception. Fig. 17B is an example of a detailed view of the blocked invoice that may be presented to a user in GUI 1700B. The following examples of invoice data may be retrieved by invoice management system and presented: invoice number, account document ("Acc. document"), purchase order, requisitioner, invoice date, posting date, vendor ID, customer name, customer address, customer phone number, customer fax number, customer email and line item data including line item number, block description (e.g., the invoice is blocked because it needs approval), line item description, quantity of goods or services invoiced, quantity of goods or services approved, quantity unit of measure, rate (i.e., price per unit) and line item total. The system may further retrieve and display the name of the person responsible for the approval. A user may review the detailed invoice data and decide to send a reminder notification to person responsible for the approval by selecting reminder option 1730. A user may include a note with the reminder by entering text into text field 1731. The original approval notification generated by the IMS system and/or the reminder notification may include an electronic approval wherein the person responsible may approve the invoice electronically by a mouse click or by entering text.

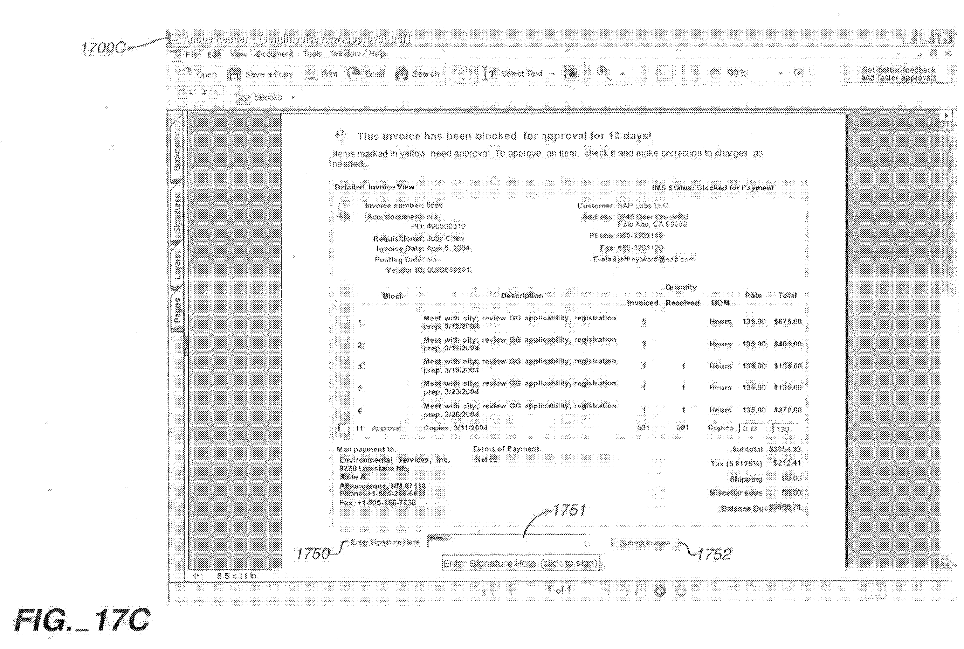

In one embodiment, the notification is an email including invoice data and an electronic signature (i.e., a digital signature). For example, Fig. 17C is an example of an Adobe® form that may be included with an approval notification. Adobe® form 1700C displays the invoice data in invoice format for easy review, and further provides an electronic signature input 1750. A user may approve the invoice by entering an electronic signature in field 1751 and mouse clicking "Submit Invoice" 1752, for example.

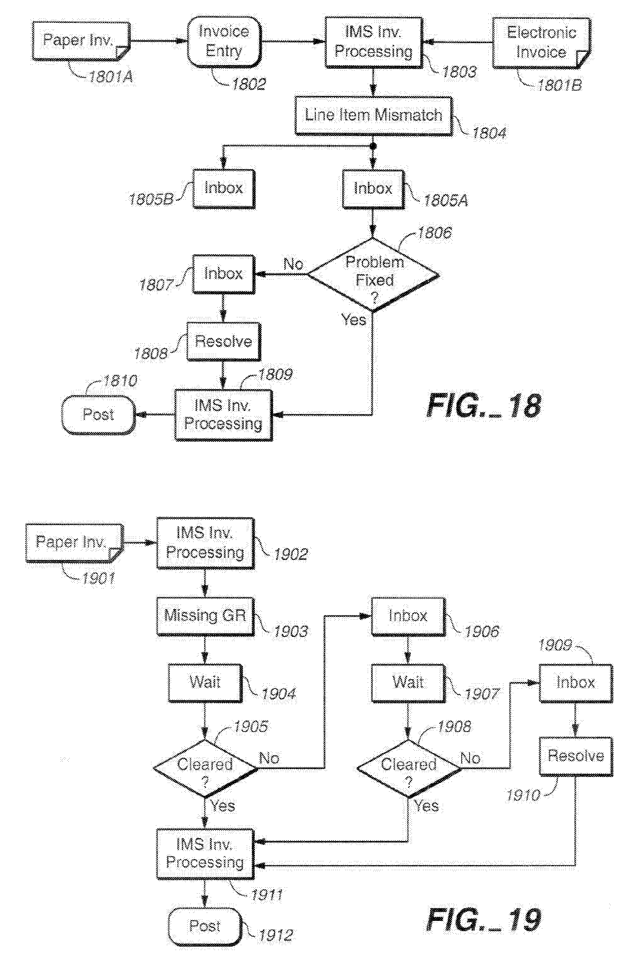

Fig. 18 is an example process flow for resolving a line item mismatch exception according to another embodiment of the present invention. A line item mismatch may occur when the invoice line item field does not match a purchase order line item field. For example, if an invoice line item description field does not match a purchase order line item description field during IMS processing at 1803, a line item mismatch may occur at 1804. At 1805A, IMS sends a line item mismatch notification to a user ("U1") within the company, such as a user in accounts payable, and may send a notification to a user ("U2") at the vendor at 1805B. If U1 or U2 can resolve the problem electronically at 1806 (e.g., if the vendor determines that the description is erroneous or if U1 can fix the problem by matching PO line items to invoice line items), then the invoice is automatically sent back to the IMS for further processing at 1809 and automatically posted at 1810. If the problem cannot be resolved, a notification is sent to another user ("U3") at 1807 who has more information about the invoice and it's line item descriptions (e.g., the requisitioner). The invoice is resolved at 1808 and returned to the IMS for further processing.

Fig. 19 is an example process flow for resolving missing goods received or services received (i.e., "Missing G/R" or "Missing S/E") exceptions according to another embodiment of the present invention. The invoice is received at 1901 and processed at 1902. A missing goods received or missing services received exception is detected by the invoice management system at 1903. In one embodiment, when IMS detects a Missing G/R, it may automatically wait for a specified amount of time at 1904 (e.g., in case the invoice is received before the goods or services are provided). If the goods or services are received and entered at 1905 into the system within the specified time period, the IMS continues processing the invoice at 1911 and automatically posts the invoice at 1912 without human intervention. If the goods or services are not provided and entered into the system within the specified time period, the system will send a notification to a user ("U1") (e.g., in the receiving department) at 1906. The IMS may again automatically wait for another specified amount of time at 1907. If the goods or services are received and entered at 1908, IMS processing may continue. If the goods or services are not received with the second time period, the system may escalate by sending a notification to another user ("U2"), such as a requisitioner at 1909. U2 may then directly resolve the issue at 1910 by corresponding with the vendor or through other electronic or non-electronic means and release the invoice for further processing.

EXAMPLE SPECIFICATION FOR AN EXCEPTION STORE

The following specification is one possible implementation of an exception pool that may be used in an invoice management system. While the following example illustrates a table-based implementation, it is to be understood that other implementations may be used. For example, the exception repository could be implemented as objects that are associated with an invoice or invoice object. The following Tables are examples of TABLE TYPE DEFINITIONS:
A) DOMAIN

Table 1

| Name IMS_EXCEPTION_TYPE | Type CHAR | Length 1 |
|---|---|---|
| Description Type of IMS exception | | |
| Permitted Values and Corresponding Meaning | | |
| D    Duplicate<br>M    Missing or Invalid Info<br>A    Non-PO Approval Required<br>L    Line Item Mismatch<br>G    No Goods Receipt<br>Q    Quantity Variance<br>P    Price Variance<br>T    Technical Error | | |

Table 2

| Name IMS_EXCEPTION_STATUS | | Type CHAR | Length 1 |
|---|---|---|---|
| Description Status of IMS exception | | | |
| Permitted Values and Corresponding Meaning | | | |
| 1 | New | | |
| 2 | Blocked Internally | | |
| 3 | Forwarded to Vendor | | |
| 4 | In Dispute | | |
| 5 | Cleared for Payment | | |
| 6 | Rejected | | |
| 7 | Deleted | | |

Table 3

| Name IMS_EXCEPTION_REFERENCE_TYPE | | Type CHAR | Length 1 |
|---|---|---|---|
| Description Type of IMS exception reference | | | |
| Permitted Values and Corresponding Meaning | | | |
| 1 | MS Office Document | | |
| 2 | Invoice | | |
| 3 | Purchase Order | | |
| 4 | Vendor | | |
| 5 | Other | | |

B) DATA ELEMENT

Table 4

| Name IMS EXCEPTION TYPE | Domain IMS_EXCEPTION_TYPE |
|---|---|
| Description Type of IMS exception | |

Table 5

| Name IMS_EXCEPTION_STATUS | Domain IMS_EXCEPTION_STATUS |
|---|---|
| Description Status of IMS exception | |

Table 6

| Name Name IMS_EXCEPTION_CASE_ID | Domain CHAR10 |
|---|---|
| Description IMS Exception Case ID | |

Table 7

| Name Name IMS_EXCEPTION_INBOX_ID | Domain CHAR10 |
|---|---|
| Description IMS Exception Inbox ID | |

Table 8

| Name Name IMS_EXCEPTION_CONTACT_ID | Domain CHAR10 |
|---|---|
| Description IMS Exception Contact ID | |

Table 9

| Name IMS_DATETIME | Domain CHAR14 |
|---|---|
| Description Date and time used in IMS exception processing | |

Table 10

| Name IMS_EXCEPTION_REFERENCE_NAME | Domain CHAR20 |
|---|---|
| Description Name of IMS exception reference | |

Table 11

| Name IMS_EXCEPTION_REFERENCE _TYPE | Domain IMS_EXCEPTION_REFERENCE_TYPE |
|---|---|
| Description Type of IMS exception reference | |

Table 12

| Name Name IMS_EXCEPTION_REFERENCE_FIELD | Domain CHAR10 |
|---|---|
| Description Field of IMS exception reference | |

Table 13

| Name IMS_EXCEPTION_REFERENCE_VALUE | Domain CHAR255 |
|---|---|
| Description Value of IMS exception reference | |

C) STRUCTURE

Table 14

| Name | | BBPS_INVOICE_EXCEPTION | |
|---|---|---|---|
| Components | | | |
| Name | Data Type | Description | |
| INVOICE_ID | IMS_GUID | ID of the invoice that caused this exception. | |
| TYPE | IMS_EXCEPTION_TYPE | Type of this exception | |
| CASE_ID | IMS_CASE_ID | ID of the case management solution that contains an entry if logged in as a case. Most common exceptions are logged as cases. | |
| INBOX_ID | IMS_INBOX_ID | ID of the inbox that this exception is assigned to. | |
| STATUS | IMS_EXCEPTION_STATUS | Status of this exception. | |
| CONTACT_ID | IMS_CONTACT_ID | ID of the contact currently working on this exception. | |
| LAST_ACTION_DATE | IMS_DATETIME | Date and time of last action on this exception | |

Table continued

| Name | BBPS_INVOICE_EXCEPTION | |
|------|------------------------|---|
| Components | | |
| Name | Data Type | Description |
| CREATION_DATE | IMS_DATETIME | Date and time when this exception was created. |

Table 15

| Name | BBPS_EXCEPTION_REFERENCE | |
|------|--------------------------|---|
| Components | | |
| Name | Data Type | Description |
| NAME | IMS_EXCEPTION_REFERENCE_NAME | Name is unique for an invoice. |
| EXCEPTION_ID | IMS_GUID | ID of the exception this record refers to. |
| EXCEPTION_TYPE | IMS_ EXCEPTION_TYPE | ID of the exception that is related to this reference |
| INVOICE_ID | IMS_GUID | ID of the invoice |
| TYPE | IMS_EXCEPTION_REFERENCE_TYPE | Reference type type |
| FIELD | IMS_EXCEPTION_REFERENCE_FIELD | Name of the field that is referenced, blank if this is not referring to a business object |
| VALUE | IMS_EXCEPTION_REFERENCE_VALUE | Value of this field, which may contain a URL for certain types such as MS Office. |

Table 16

| Name | BBPS_INVOICE_EXCEPTION_UI | |
|------|---------------------------|---|
| Components | | |
| Name | Data Type | Description |
| ID | IMS_GUID | Auto generated ID that uniquely identifies the exception. |
| .INCLUDE | BBPS_INVOICE_EXCEPTION | |
| REFERENCES | BBPT_IMS_EXCEPTION_REFERENCE | References related to this exception. |

D) TABLE TYPE

Table 17

| Name | Line Type |
|------|-----------|
| BBPT_IMS_EXCEPTION_REFERENCE | BBPS_EXCEPTION_REFERENCE |

Table 18

| Name | Line Type |
|------|-----------|
| BBPT_IMS_INVOICE_EXCEPTION_UI | BBPS_INVOICE_EXCEPTION_UI |

The following Tables are examples of TABLE DEFINITIONS. The exception pool may include a table BBPD_IMS_EXPPOOL, which is the exception pool that contains exceptions related to invoices. This table may be used as the core table for exception processing. There may also be other tables that contain useful information. Table BBPD_IMS_EXPPOOL has the following structure:

Table 19

| (1) Column(s) of "BBPD_IMS_EXPPOOL" Table | | | |
|---|---|---|---|
| Name | Datatype | Null Option | Comment |
| MANDT | MANDT | NOT NULL | Client Specific |
| ID | IMS_GUID | NOT NULL | Auto generated ID that uniquely identifies the exception |
| .INCLUDE | BBPS IMS INVO ICE_EXCEPTION | | |
| (2) Primary Key Column(s) of "BBPD_IMS_EXPPOOL" Table | | | |
| Name | | Comments | |
| MANDT | | | |
| ID | | | |
| (3) Index(s) of "BBPD_IMS_EXPPOOL" Table | | | |
| Name | | Unique | |
| ID | | Yes | |
| INVOICE_ID | | No | |
| TYPE | | No | |
| INBOX_ID | | No | |
| STATUS | | No | |

The exception pool may include a Lock Object table E_IMS_EXC, which is lock object for synchronization of the exception pool.

Table 20

| Name E_IMS_EXC | | |
|---|---|---|
| Description Lock object for synchronization of exception pool. | | |
| Primary Table BBPD_IMS_EXPPOOL | | |
| Lock Parameters | | |
| Name | Table | Field |
| MANDT | BBPD_IMS_EXPPOO L | MANDT |
| ID | BBPD_IMS_EXPPOO L | ID |

The exception pool may include a Table BBPD_IMS_EXPREF, which is a reference to another item such as a PO, Invoice or context. These items could either reside in a reference pool or the invoice pool. There may be multiple reference items for an exception.

Table 21

| Column(s) of "BBPD_IMS_EXPREF" Table | | | |
|---|---|---|---|
| Name | Datatype | Null Option | Comment |
| MANDT | MANDT | NOT NULL | Client Specific |

Table continued

| Column(s) of "BBPD_IMS_EXPREF" Table | | | |
|---|---|---|---|
| Name | Datatype | Null Option | Comment |
| ID | IMS_GUID | NOT NULL | Internal Reference ID that uniquely identifies a reference to an exception. |
| .INCLUDE | BPPS_IMS_EXCEPTION_REFERENCE | | |
| Primary Key Column(s) of "BBPD_IMS_EXPREF" Table | | | |
| Name | | | Comment |
| ID | | | |
| Foreign Key Column(s) of IMS_EXP_REF" Table | | | |
| Name | | Check Table | Check Field |
| EXCEPTION_ID | | BBPD_IMS_EXPPOOL | ID |
| Index(s) of IMS_EXP_REF" Table | | | |
| Name | | | Unique |
| ID | | | Yes |
| INV_ID | | | No |
| NAME | | | No |
| TYPE | | | No |

The exception pool may include a plurality of Agent Application Program Interfaces ("APIs") that allow external access for retrieving exceptions, searching exceptions, modifying exceptions or adding exceptions. For example, a user may retrieve an exception according to the input exception ID. References related to the exception will also be retrieved. A warning embedded in an export parameter E_RET may indicate that the exception with the specified ID does not exist.

Table 22

| Input Parameter(s) | |
|---|---|
| Name IV_EXCEPTION_ID | Data Type IMS_GUID |
| Output Parameter(s) | |
| Name | Data Type |
| ES_INVOICE_EXCEPTION_UI | BBPS_IMS_INVOICE_EXCEPTION_ UI |
| EV_RETURN | BAPIRETURN |
| Related table(s) | |
| BBPD_IMS_EXPPOOL, BBPD_IMS_EXPREF | |

The exception pool may include an Agent API that searches for exceptions with specified field values. References related to these exceptions are also retrieved. A user inputs an IS_INVOICE_EXCEPTION_UI structure, whose fields specify the searching criteria. An empty field implies that there's no requirements for this field. If no records satisfy those criteria an empty export parameter ET_INVOICE_EXCEPTION would be returned.

Table 23

| Input Parameter(s) | |
|---|---|
| Name | Data Type |
| IS_INVOICE_EXCEPTION_UI IS_INVOICE_ EXCEPTION_UI | BBPS_ IMS_ INVOICE_ EXCEPTION_ BBPS_IMS_ INVOICE_EXCEPTION_ UI |

Table continued

| Output Parameter(s) | |
| --- | --- |
| Name | Data Type |
| ET_INVOICE_EXCEPTION_UI | BBPT_IMS_INVOICE_EXCEPTION_UI |
| ES_RETURN | BAPIRETURN |
| Related table(s) | |
| BBPD_IMS_EXPPOOL, BBPD_IMS_EXPREF | |

The exception pool may include an Agent API that modifies the exception specified by the input parameter IS_INVOICE_EXCEPTION_UI's ID field. If the input parameter's fields are empty, such fields would not influence the exception pool. All the references related to the specified exception will be deleted first, and new references will be created according to the REFERENCES field of the input parameter. Redundant fields in the reference pool may be set with the values contained in IS_INVOICE_EXCEPTION_UI itself, rather than the attached REFERENCES. This measure may be used to keep the consistency between the BBPD_IMS_EXPPOOL and BBPD_IMS_EXPREF database tables. One cannot make a reference's fields different from its related exception with BBP_IV_IMS_MODIFY_EXCEPTION.

Table 24

| Input Parameter(s) | |
| --- | --- |
| Name | Data Type |
| IS_INVOICE_EXCEPTION_UI | BBPS_IMS_INVOICE_EXCEPTION UI |
| Output Parameter(s) | |
| Name | Data Type |
| ES_RETURN | BAPIRETURN |
| Related table(s) | |
| BBPD_IMS_EXPPOOL, BBPD_IMS_EXPREF | |

The exception pool may include an Agent API that adds an exception reference. Redundant fields such as EXP_ID and INV_ID may be set according to the related exception, rather than the fields of the input I_EXPREF. This may be used as another measure to keep the consistent of IMS_INVEXP and IMS_EXPREF tables.

Table 25

| Input Parameter(s) | |
| --- | --- |
| Name | Data Type |
| IV_EXCEPTION_ID | IMS_GUID |
| IS_EXCEPTION_REFERENCE | BBPS_IMS_EXCEPTION_REFERENCE |
| Output Parameter(s) | |
| Name | Data Type |
| ES_RETURN | BAPIRETURN |
| Related table(s) | |
| BBPD_IMS_EXPREF | |

Embodiments of the present invention may include a search engine to support invoice information retrieval. Techniques that may be used to search for information are disclosed in U.S. Patent Application No. 10/789,426, entitled "Fast Aggregation of Compressed Data Using Full Table Scans," filed Feb. 27, 2004 by Stefan Biedenstein et al., the contents of which is hereby incorporated herein by reference in its entirety. Additional techniques that may be used to search for information are disclosed in U.S. Patent Application No. 10/789,812, entitled "Merging Partial Results into Single Result," filed Feb. 27, 2004 by Jens-Peter Dittrich et al., the contents of which is hereby incorporated herein by reference in its entirety.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. For example, an invoice management system may include some or all of the innovative features described above. Additionally, while one embodiment of an invoice management system may be advantageously implemented as a stand-alone software system, features and advantages of the present invention may also be obtained by incorporating the methods and/or software systems defined by the following claims as part of one or more existing systems.

Described herein are techniques for retrieving information including similarity search retrieval methods. In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include obvious modifications and equivalents of the features and concepts described herein.

Embodiments of the present invention include a method of retrieving information elements from a structured information base as illustrated in Fig. 20. Information base 2103 represents the full scope of structured information available to the system. A structured information base 2103 is a source of available structured information such as, for example, a database, collection of databases or an information repository. As a more specific example, a structured information base may be a physical digital record stored on disk or tape of a set of tables recording facts about certain business transactions such as sales or purchases, where each row in the table corresponds to a specific transaction and each column specifies such attributes of each transaction as date and time, location, responsible person or persons, product or products involved, monetary value of the transaction, and so on. However, it is to be understood that the present invention is general and may be applied on top of any database-like system. As used herein, structured information means that the information base is made up of identifiable elements (i.e., information elements) of data or metadata that each includes one or more attributes. As used herein, an attribute means an identifiable component of an information element having some specific associated meaning. For example, in a database table, the rows of the table would be information elements and the columns of a database table may be attributes of each row. More generally, an attribute may be a field within a record in the database. The rows of a database table are commonly referred to as "business objects" in some applications, and the columns of the table are the attributes of each business object. In object-oriented technology, each object may be an information element, and an attribute may be an element of data associated with the object. In XML, an attribute may be a sub-element defined within an element. Information elements may also be electronic documents in any of a variety of formats, including .pdf, .doc, .xls, or .ppt, for example. Attributes of electronic documents typically include data and metadata associated with the document, but not the main body of text in, for example, a .doc file. Attributes may take on values ("attributes values"), which may be any of a variety of different types. Thus, attribute values may be numbers (e.g., integers or floats), text characters or strings to name just a few. It is to be understood that the examples provided above are not exhaustive.

In one embodiment, the present invention includes a query 2101 that is provided to a retrieval engine 2102. Retrieval engine 2102 performs a search across information base 2103 for information elements that satisfy the parameters of query 2101. A query is a retrieval request (e.g., a search request) that includes parameters that are used during the information retrieval process. A user may specify a query by specifying the parameters. For example, if a user wants to retrieve all records that were entered into a system on a particular date (e.g., 6/21/71), the user may specify such date as one of the query parameters. According to embodiments of the present invention, the system will then return all records having the same date or similar dates in response to receiving the query.

Attribute values may be specified in query 101 as retrieval parameters, and embodiments of the present invention will return information elements having attribute values that are the same as, or similar to, the specified attribute values. Fig. 20 illustrates that an information retrieval method according to one embodiment of the present invention may retrieve information elements that have attributes in different ranges. For example, retrieval engine 2102 may initially search information base 2103 for information elements having attribute values in a first range 2105, and then search information base 2103 for information elements having attribute values in a second range 2104 that includes the first range 2105. It is to be understood that if multiple attribute values are specified (e.g., M specified attributes), then the first and second ranges may be multidimensional (e.g., M-dimensional). Embodiments and advantages of this technique will be described in more detail below.

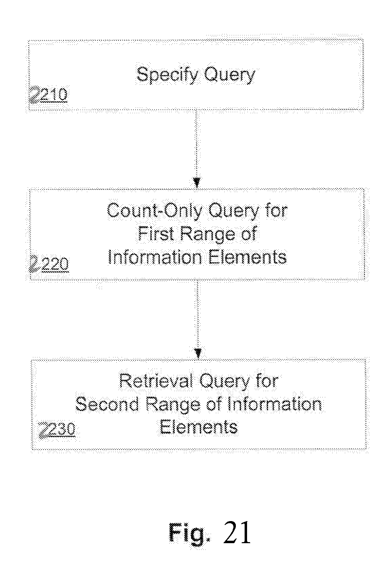

Fig. 21 illustrates a method of retrieving information according to one embodiment of the present invention. At 2210, a query is specified (e.g., by a user). The query may include one or more specified attribute values corresponding to one or more attributes of interest. For example, if the query is related to automobile prices, the query may include an attribute value of "5000" corresponding to a "Price" attribute (i.e., $5000) and an attribute value of "Red" corresponding to a "Color" attribute. At 2220, the system performs a count-only query on a structured information base for information elements having one or more attribute values within a first range, where the first range includes the attribute values specified in the query. A count-only query is a query that returns a number (e.g., K) equal to the number of information elements that satisfy the query. The range of a query is the scope of attribute values, states, or contents responsive to a query. Using the example above for illustration, a count-only query may return a number equal to the number of database rows (e.g., automobile business objects) having a price within a range of prices including $5000 (e.g., $4000 to $6000). Furthermore, the count only query may return a number equal to the number of automobiles that have colors within a color range including "Red" (e.g., "Black," "Red," "White").

At 2230, the system performs a retrieval query for information elements having one or more attribute values within a second range, wherein the second range includes the first range. A retrieval query is when the system actually retrieves the information. The retrieval query returns elements having attribute values in the second range, which is larger than the range used to perform the count. Using the example above, the second range may include prices from $3500 to $6000 or $3000 to $10,000 and a range of colors such as [Green, Black, Red, White, Blue]. Because the count-only query is conducted first, the system is guaranteed to return at least K information elements during the retrieval. One advantage of this approach is that it is typically much faster to perform a count-only query than a retrieval query. Thus, the system need not actually retrieve information until the count-only query verifies that some minimal amount of information will be available.

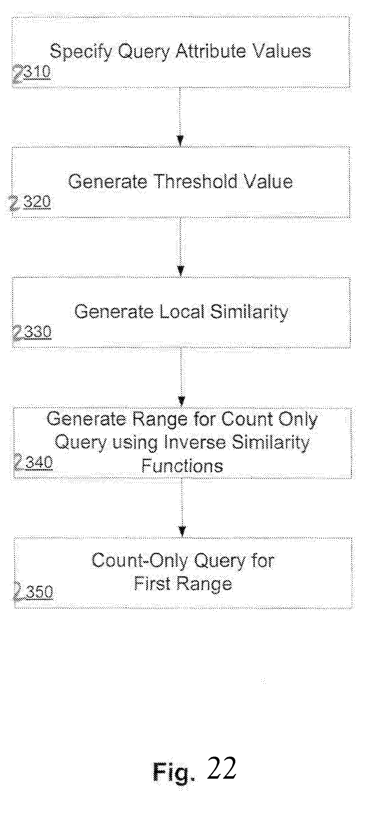

In one embodiment, ranges may be based on a threshold value. For example, Fig. 22 illustrates a method according to another embodiment of the present invention. In this example, the query attribute values are specified at 2310. At 2320, a threshold value is generated. The threshold value may be used to determine which information elements fall within the first range, and which do not. For example, the threshold value may represent a specified value of a function that measures the similarity of the attribute values in a query and each information element. The attribute values of the query and the information element are thus mapped by the function to a value that represents their similarity. If a mapped information element falls below the threshold value, then such element is outside of the range and not counted during the count-only query (i.e., because it is not sufficiently similar to the query). Conversely, if a threshold value is known, an inverse mapping may be used to obtain attribute values for a range query as will now be described.

At 2330, local similarity values are generated for each of the attributes in the query using the threshold value. A local similarity value is a measure of the similarity (e.g., closeness or relatedness) of an information element to the query with respect to a particular attribute. For example, the similarity between one attribute of an information element and the corresponding attribute of a query may be given by a predefined relationship between the range of possible values that the attributes may take on and the domain of possible values for the local similarity. The predefined relationships between attribute values and local similarity values are referred to herein as a "local similarity functions."

In one embodiment of the present invention, the threshold value is a function of local similarities, and represents a "global similarity." The threshold value may be thought of conceptually as a plane in an M-dimensional space, where M is equal to the integer number of attributes in the query. Once a threshold value is generated, local similarity values may be generated from the threshold value. After local similarities are generated, attribute ranges for the count-only query may be generated at 2340 using the local similarity values and the inverse of the local similarity functions mentioned above (i.e., "inverse local similarity functions"). At 2350, the system performs the count-only query for the first range of information elements.

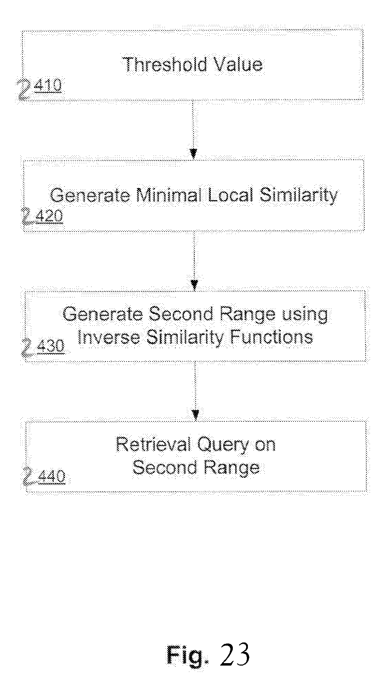

Fig. 23 illustrates generating a range for a retrieval query according to another embodiment of the present invention. Generating a range for a retrieval query starts at 2410 with the threshold value. At 2420, minimal local similarities are generated. A minimal local similarity is the smallest possible local similarity value an information element may have for a given attribute and yet still have a global similarity greater than or equal to the threshold value. At 2430, attribute ranges may be generated from the minimal local similarities using the inverse local similarity functions. At 2440, the retrieval query is performed for information elements having one or more attribute values within the resulting range.

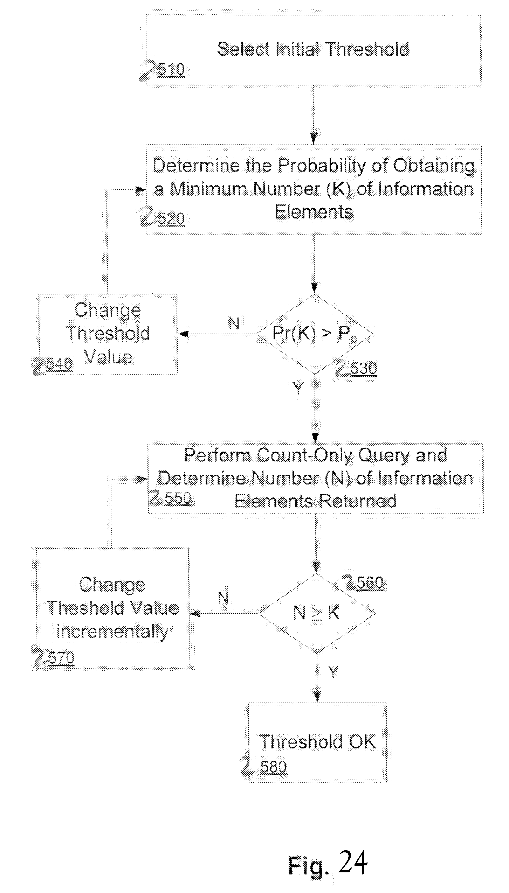

Fig. 24 illustrates generating a threshold value according to another embodiment of the present invention. At 2510, an initial threshold values is generated. For example, the initial threshold value may be generated using a volume as described in more detail below. At 2520, the probability of obtaining a minimum number (K) of information elements is estimated. In one embodiment, it may be assumed that the distribution of represented values of an attribute within a certain range among a given set of information elements is even, such that, for example, if a color range comprises red or green, then it is assumed that there is the same number of red elements as green elements, so the probability estimate could be made directly from the position of the threshold within the range, such that, for example, if the threshold includes red but excludes green, the threshold may be estimated to have the effect that half the elements from the given set are selected. In more practically useful embodiments, more sophisticated probability estimates, based on binomial or other distributions, may be used. At 2530, the probability is compared to a threshold probability ($P_o$). If the probability of obtaining a minimum number (K) of information elements is less than the threshold probability (i.e., $Pr(K) < P_o$), then the threshold value is changed at 2540 and the probability of obtaining K results is determined using the new threshold value. However, if the probability of obtaining a minimum number (K) of information elements is greater than the threshold probability (i.e., Pr(K) > P$_o$), then the count-only query is performed at 2550 and the number of information elements returned, N, is determined. At 2560, the number of information elements returned from the count-only query is compared to the desired number of results (i.e., N ≥ K). If N < K, then the threshold value may be changed incrementally at 2570, and the count-only query may be repeated at 2550. If N ≥ K then the threshold value is satisfactory. However, in some embodiments, if N is much greater than K then the threshold value may be decreased incrementally until N is within some satisfactory range of K. It is to be understood that the exact flow depicted in Fig. 24 is not an essential part of the present invention but merely illustrative of an iterative threshold adjustment that may be used to generate the threshold value used at 2410 in Fig. 23.

EXAMPLES

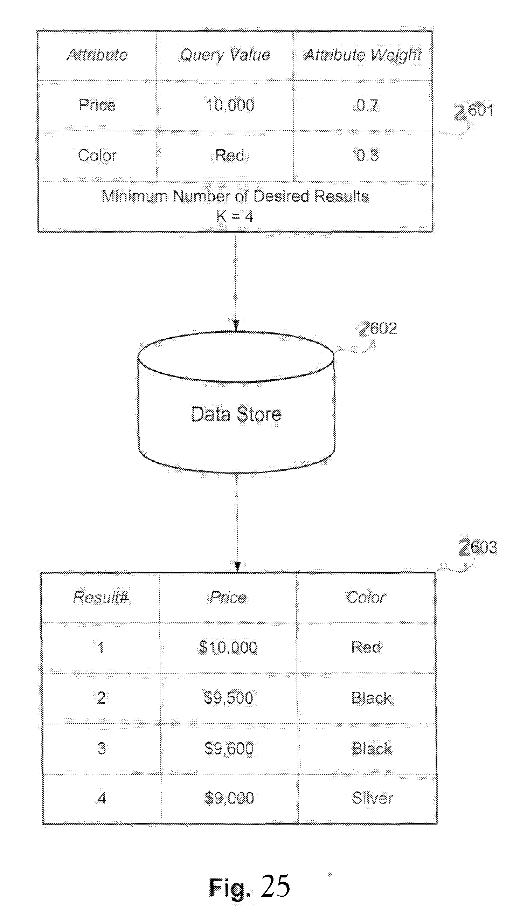

Fig. 25 is an example of information retrieval according to one embodiment of the present invention. In one embodiment, a query 2601 may include query values, attribute weights and/or a minimum number (K) of desired results. Attribute weights are numerical values that represent the importance of the corresponding attribute. In this example, the weights are normalized values between zero and one (i.e., [0...1] such that their sum equals 1). Thus, the weight of 0.7 represents that the "Price" attribute is more important than the "Color" attribute, which has a weight of 0.3 in this example. Of course, it is to be understood that query 2601 may be specified in a variety of ways. In one embodiment, a user may type in a phrase such as, "I want a green car for about € 5000!" The phrase may be parsed automatically and weights applied in a query Q = [price - 5000 : 0.4; color - green : 0.6; K = 3], wherein the weights and minimum number (K) of desired results may be specified automatically or by a user.
Query 2601 is used to search data store 2602 for information that satisfies the query parameters. A count-only query is performed first to ensure that at least K results are obtained. Next, a retrieval query is performed to return results 2603. In this example there are exactly four (4) results. The first result is an exact match of query 2601 (i.e., a red car for $10,000). However, the second result is not an exact match, but it is similar because it returned a black car for $9,500. The third result is also not an exact match, but it is similar because it returned a black car for $9,600. The fourth result returned a silver car for $9,000, which is the most dissimilar to the query parameters of this example.

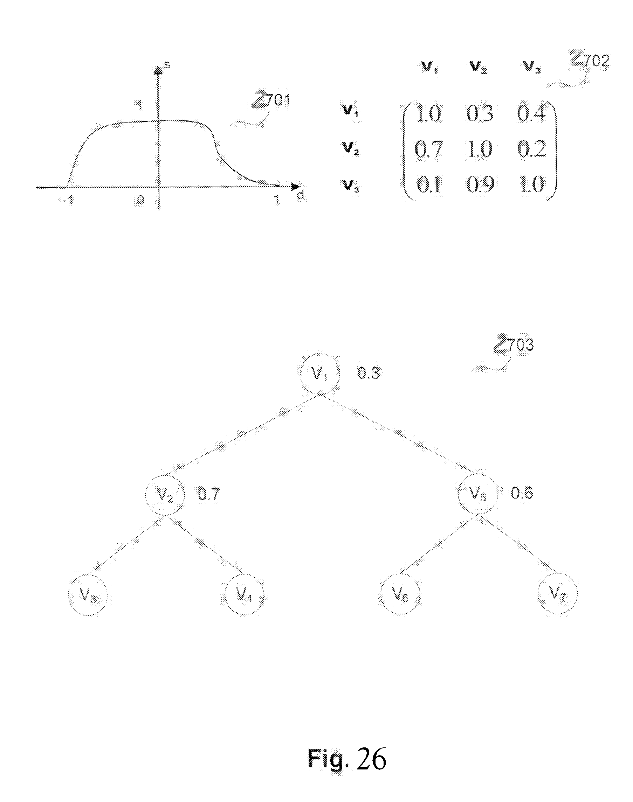

Fig. 26 illustrates representations and notations that may be used in the course of specifying of a similarity model that may be used to determine the similarity between a query and an information element according to one embodiment of the present invention. For the remainder of this disclosure, the term "object" will be used to represent the information elements in an information base (e.g., the information base comprises "business objects"). For a given query, the similarity of an object to a query may be computed based on the attributes in the query and the corresponding attributes in the object. For each relevant attribute, a similarity function (i.e., a local similarity function) may be defined. Moreover, the values of the individual similarity functions may be combined to give an overall global similarity. Thus, a mapping from attributes to global similarity includes similarity functions for each attribute and a global similarity function. The local similarity functions and global similarity function are collectively referred to herein as a "similarity model."
A similarity model may include multiple relationships between attributes and local similarity values. Fig. 26 depicts three different representational forms that may be used in specific embodiments, either alone or in combination, to specify a similarity model. Numerical function 2701 is a possible similarity function s = f(d), where "s" is the similarity and "d" is the distance between an actual attribute value and the exact value specified in the query. Numerical function 2701 may be a polynomial, root, or exponential (e.g., sigmoid), for example. These functions can be applied for float, integer or other numerical attributes. The local similarity for an object may be computed based on the distance between the query value and the object value for the respective attribute. In addition, there are many parameters that may be used to translate a given function or change its shape.
A matrix may be used to model all types of attributes, such as strings, integers or floats. A matrix may be used to ascribe a numerical value for particular attribute values in a query and corresponding attribute values in an object (e.g., the value associated with the intersection of query value V1 with object value V2). Matrix 2702 is a possible matrix giving discrete similarity values for given pairings of attribute values. If the query and object values are the same, then their similarity is 1.0 (e.g., leading diagonal), and if they differ, then they need not always differ symmetrically (e.g., v$_{12}$ need not be the same as v$_{21}$). In this example, the columns represent the attribute values instantiated by business objects and the rows represent attribute values specified in the query.
A taxonomy may also be used to model all types of attributes. In particular, taxonomies may be used for attributes that can be ordered in a hierarchical structure, and which may have a wider range of possible values than attributes modeled as matrices. The nodes of the taxonomy contain the minimal similarity value for all children. The local similarity value is generated by finding the common parent node. Taxonomy 2703 provides numerical similarity values for pairs of attributes. The nearest node above a given attribute pair (i.e., above v$_i$ and v$_j$) in the tree gives their minimal similarity. For example, the minimal similarity of v$_5$ and v$_6$ is 0.6, and the minimal similarity of v$_3$ and v$_6$ is 0.3.
The following equation is an example of a global similarity function:

$$\sigma = \sum_{i=1}^{M} w_i s_i \, .$$

In this example, the global similarity, σ, of an object with respect to a query is defined as the weighted sum of its local similarity values, $s_i$, for all attributes appearing in the query, wherein $w_i$ are the weights for the attributes and M is the number of attributes in the query. In this example, the weights are normalized between 0 and 1 such that

$$\sum_{i=1}^{M} w_i = 1 \, .$$

Features and advantages of the present invention include using inverse similarity functions to build query ranges that count candidate objects from an information base. The system can then retrieve at least a minimum number (K) of desired results. As mentioned above, a similarity function may be defined for each relevant attribute of an object. Furthermore, a global similarity of an object with respect to a query may be defined based on the local similarities and weights (e.g., a weighted sum of local similarities). Thus, ranges for a count-only query and retrieval query may be determined from a global similarity threshold value.

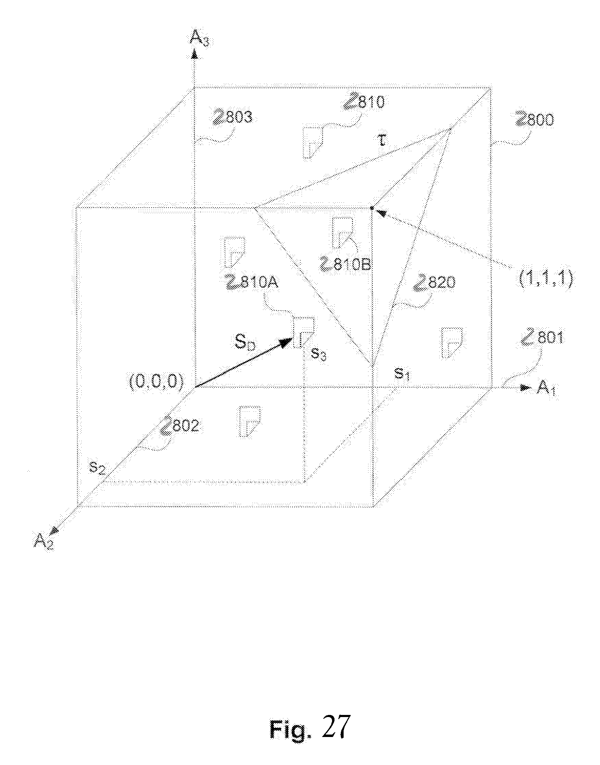

Fig. 27 illustrates a conceptual model that may be used to further understand the concept of a threshold in a global similarity model. Fig. 27 shows that objects in an information base may be represented in an M-dimensional space, where M is the number of attributes. In this example, an M-cube 2800 is shown, where M = 3 because there are three (3) attributes. The axes of the M-space correspond to the local similarity values for each of the attributes. For example, the first axis 2801 corresponds to a range of values of a first local similarity function for a first attribute $A_1$, the second axis 2802 corresponds to a range of values of a second local similarity function for a second attribute $A_2$ and the third axis 2803 corresponds a range of values of a third local similarity function for a third attribute $A_3$. The local similarity values are all normalized to the range [0...1]. Objects 2810 in the information base may, therefore, be mapped into the M-cube 2800. For example, object 2810A has a local similarity value of $s_1$ with respect to the first attribute $A_1$, a local similarity value of $s_2$ with respect to the second attribute $A_2$ and a local similarity value of $S_3$ with respect to the third attribute $A_3$. For a given object with attribute values ($v_1$, ..., $v_m$), there is a corresponding object similarity vector $S_D$. Therefore, each object in an information base has a corresponding point in the complete M-cube.

In this example, the values of the similarity functions are normalized between 0 and 1, where maximally similar is represented by 1 (i.e., equal to; the same as), and maximally dissimilar is represented by 0. Therefore, M-cube 2800 is a cube in M-dimensions (in this case M = 3) with all the edges of length 1, and its coordinate edges represent the local similarity for the attributes with respect to a given query. The query, and the objects that are an exact match with respect to the query, are represented at the vertex (1,1,1) of M-cube 2800, and in general as vertex (1,...,1) of the M-cube. The most dissimilar objects are located at the vertex (0,0,0), and in general as vertex (0,...,0) of the M-cube.

Fig. 27 shows a plane 2820 intersecting M-cube 2800. This plane may be referred to as an M-plane. M-plane 2820 is a 2-dimensional plane in a 3-cube, and an (M - 1)-dimensional hyperplane in a general M-cube, that is defined by a constant global similarity threshold, T, with respect to a given query. In the 3-dimensional case shown in Fig. 27, the equation for the M-plane is:

$$w_1 s_1 + w_2 s_2 + w_3 s_3 = T,$$

wherein $w_1$, $w_2$ and $w_3$ are the weights of the respective attributes $A_1$, $A_2$ and $A_3$, and $s_1$, $s_2$ and $s_3$ are the local similarity values for the respective attributes $A_1$, $A_2$ and $A_3$, and T is the global similarity threshold value, for example as given by the algorithm presented in Fig. 24. The equation for the general case of M dimensions is analogous.

The intersection of M-plane 2820 with M-cube 2800 defines an M-pyramid. Thus, in this example the M-pyramid is the pyramid with an apex at (1,1,1) and its base given by the intersection between the complete M-cube 2800 and M-plane 2820. The M-pyramid is degenerated if and only if at least one of the points that define its base is less than 0 (i.e., if the M-plane intersects more than three sides of the M-cube). Using this conceptualization, it is now apparent that an M-pyramid defined with respect to a given query, Q, and global similarity threshold, T, contains all objects (e.g., object 2810B) that have a global similarity greater than or equal to T.

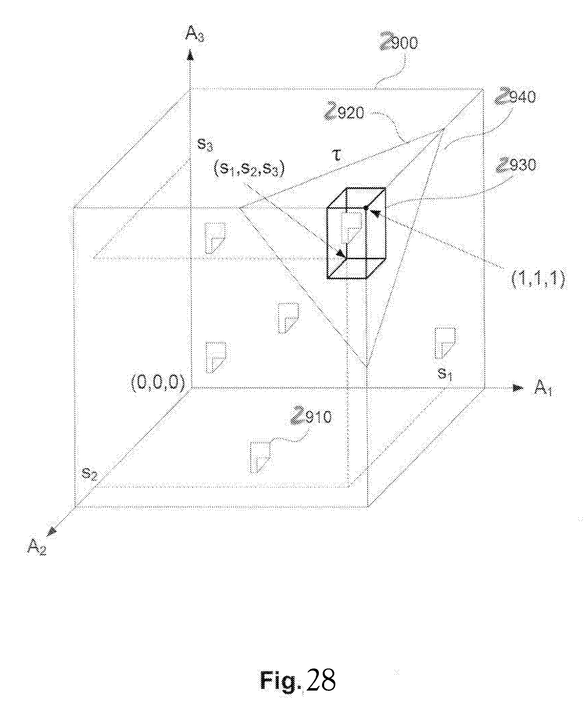

Fig. 28 illustrates count-only query ranges using an M-cube model according to one embodiment of the present invention. A threshold value may be used to define an M-plane 2920, which in turn intersects with M-cube 2900 to define an M-pyramid. According to one embodiment of the present invention, a count-only query is conducted on the largest possible M-cuboid 2930 that fits above M-plane 2920. M-cuboid 2930 is a cuboid in M-dimensional space, whose edges have lengths between 0 and 1. The coordinates of M-cuboid 2930 represent the limits for the local similarity functions for the respective attributes. In other words, if a threshold value is known, local similarity values can be obtained that will define the M-cuboid. For example, M-cuboid 2930 is defined by the vertices $(S_1, S_2, S_3)$. Using these similarity values, inverse similarity functions may be used to obtain a range of attribute values for a count-only query. The count-only query will count the objects within M-cuboid 2930. The results of this count may be used to further tailor the threshold value so that at least K results are obtained. After at least K results are obtained, then the retrieval query can be performed.

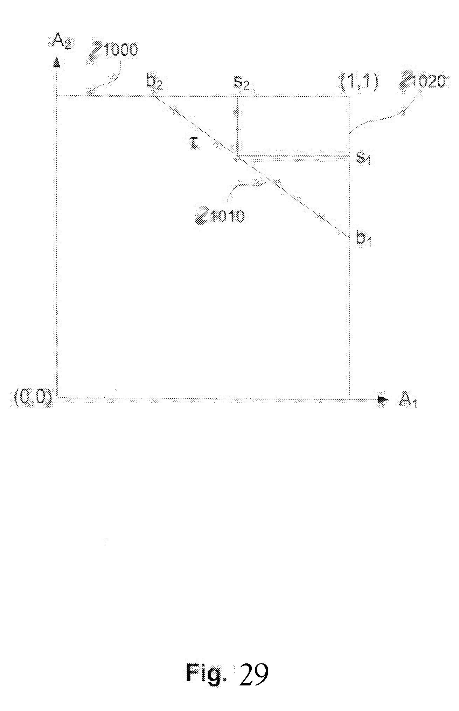

Fig. 29 shows an example of an M-cube for the case M = 2, such that the M-cube 21000 is a unit square with corners (0,0), (0,1), (1,1), (1,0), the M-plane is a line 21010 that intersects the sides of the square at $b_1$ and $b_2$, the M-pyramid is a triangle with corners $(1, b_1)$, (1,1), $(b_2, 1)$, and the M-cuboid 21020 is a rectangle that has the point (1,1) as its upper right corner. To maximize the volume of the M-cuboid relative to a given M-plane, one of its corners must be exactly on the M-plane. In the example of Fig. 29, the lower left corner of rectangle 21020 is on the line 21010.

That is, the coordinates $(s_1, s_2)$ of the lower left corner of the rectangle satisfy the equation:

$$W_1 S_1 + W_2 S_2 = T,$$

wherein T is the global similarity threshold that defines the M-plane 21010, and with the additional constraints that $b_1 < s_1 < 1$ and $b_2 < s_2 < 1$. The M-cuboid is at a maximum where,

$$w_1(1 - s_1) = w_2(1 - s_2).$$

The generalizations of this result for M dimensions, M > 2, and for non-normalized local similarities $s_i$ with maximum values greater than 1, are both analogous.

The M-cuboid with the largest volume may be found by considering the following equations. First, the volume of an M-cuboid is given as:

$$V = \prod_{i=1}^{M}(1 - s_i)$$

To maximize volume, note that the following relation applies:

$$W_1 S_1 + W_2 S_2 + \ldots + W_M S_M = T.$$

Therefore, for a given threshold value, T, the volume is maximized when:

$$w_1(1 - s_1) = w_2(1 - s_2) = \ldots = w_M(1 - s_M).$$

These equations can be used to calculate the values $s_i$. If a calculated value of $s_i$, for some $1 \leq i \leq M$, would be negative, corresponding to a degenerated M-pyramid, $s_i$ can be set to 0 and the corresponding border point $b_i$ can be examined to correct the calculation. The result of the calculation is the M-cuboid with maximal volume for a given threshold value, T. The resulting M-cuboid is referred to herein as the interior M-cuboid for the given M-plane, since it fits inside the M-pyramid.

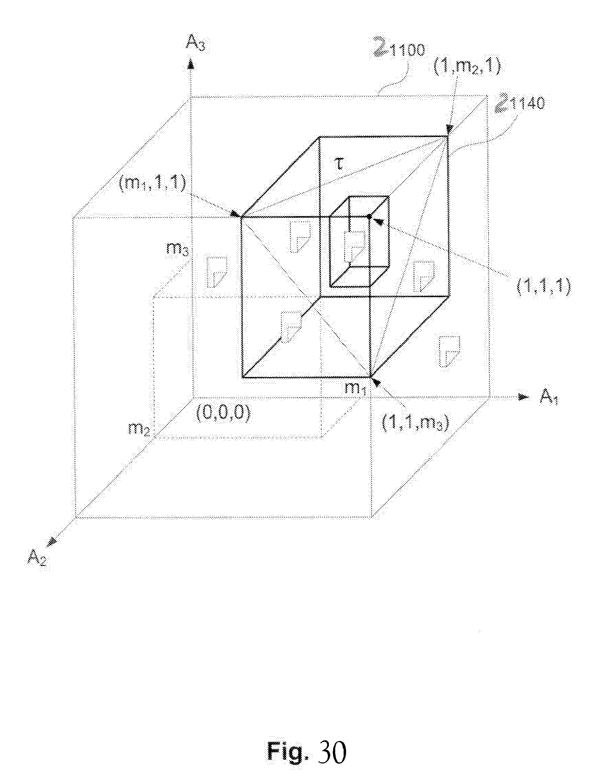

Fig. 30 illustrates retrieval query ranges using an M-cube model according to one embodiment of the present invention. The retrieval query is obtained from the corners of the M-pyramid. The corners of the M-pyramid are referred to as the minimal local similarities, $m_i$, and include $(m_1,1,1)$, $(1,m_2,1)$ and $(1,1,m_3)$. These points may be used to define an exterior M-cuboid 21140, which contains the M-pyramid and may be used to define the retrieval query. For example, for a particular threshold value, T, the minimal local similarities for each attribute may be determined by observing the following relation given in the example above:

$$w_1\, \mathbf{s}_1 + w_2\, \mathbf{s}_2 + \ldots + w_M\, \mathbf{s}_M = \tau,$$

where M is the number of attributes. At each corner of the M-pyramid (e.g., $(\mathbf{s}_1, \mathbf{s}_2, \mathbf{s}_3) = (m_1,1,1)$ in M-cube 21100), the global similarity is as follows:

$$w_1\, m_1 + w_2\, (1) + \ldots + w_M\, (1) = \tau,$$

$$w_1\, m_1 = \tau - (w_2 + \ldots + w_M).$$

Since the weights are normalized we have the following:

$$w_1 + w_2 + \ldots + w_M = 1,$$

$$w_2 + \ldots + w_M = 1 - w_1.$$

This equation may be substituted into the equation for $m_1$ as follows:

$$w_1\, m_1 = \tau - (1 - w_1),$$

$$m_1 = [\tau - (1 - w_1)] / w_1.$$

More generally,

$$m_i = [\tau - (1 - w_i)] / w_i.$$

As mentioned above, an M-pyramid may become degenerated if the M-plane intersects more than three sides of the M-cube. If the M-pyramid is degenerated, then the minimal local similarity value produced by the equation above may be less than zero. Thus, the minimal local similarity should be constrained to be greater than or equal to zero.

[0141]   [0002] Based on the minimal local similarity $m_i$, ranges of values for the corresponding attribute may be determined using an inverse similarity function. For example, similarity functions may take as parameters a normalized distance between an object and a query for a respective attribute and return a similarity value. Conversely, the inverse similarity function may take a similarity value and return a normalized distance. Thus, normalized distances can be obtained using minimal local similarities. The normalized distances, in turn, can be denormalized to obtain values that have a similarity greater than minimal local similarity $m_i$. The corresponding range may be conceptualized by cuboid 21140 of Fig. 30. Thus, given a query value and the normalized distance, the minimum and maximum values can be determined. The minimum and maximum values may also depend on additional parameters that modify or scale the normalized distance.

Example similarity functions include numerical functions, matrices or taxonomies. Numerical functions may be described using equations capable of covering continuous ranges of values. Such functions may be described with or without the assistance of graphs (e.g., 2701 of Fig. 26). Matrices or taxonomies may be used to represent discrete sets of values.

Example numerical functions include polynomials, exponentials and roots. Each of these receives two main variables as parameters. One of the parameters is the distance, $d = d(V_Q, V_O)$ between the query value $V_Q$ and the object value $V_O$ for a particular attribute. The second parameter is a slope parameter, $\rho$, which affects the curvature of the function. The slope, $\rho$, may also be a normalized value between 0 and 1. The three numerical functions may be written as follows:

(1) Polynomial:

$$f_A(d) = (1-d)^{\frac{1}{\rho}}$$

(2) Root:

$$f_A(d) = (1-d)^{\rho}$$

(3) Exponential:

$$f_A(d) = \begin{cases} 1 - \dfrac{(2d)^{\frac{1}{\rho}}}{2}, & d < \dfrac{1}{2} \\[3ex] \dfrac{(2-2d)^{\frac{1}{\rho}}}{2}, & d \geq \dfrac{1}{2} \end{cases}$$

wherein a slope of $\rho = 1$ collapses the three cases into a single linear function $f_A(d) = 1 - d$. The local similarity functions may be symmetric or asymmetric. If the function is symmetric, the similarity between a query value and an object value is equal to the similarity between the object value and the query value. If the function is asymmetric, the similarity between a query value and an object value can be different from the similarity between the object value and the query value. As mentioned above, the global similarity is a function of the individual local similarities. There are many possible ways in which the local similarity functions may be combined to give a meaningful global similarity such as minimum, maximum or linear combinations (e.g., weighted sums as in the examples above).

The inverse similarity functions may be obtained for each of the example numerical functions above. The range of values is defined by a minimal and maximal value because these functions are strictly decreasing. To compute the minimum and maximum of the interval, the normalized distance must first be determined. The distance for the three numerical functions is computed as follows:

(1) Polynomial:

$$d_i = 1 - m_i^{\rho}$$

(2) Root:

$$d_i = 1 - m_i^{\frac{1}{\rho}}$$

(3) Exponential:

$$d_i = \begin{cases} 1 - \dfrac{(2m_i)^\rho}{2}, x \ge \dfrac{1}{2} \\ \dfrac{(2 - 2m_i)^\rho}{2}, x < \dfrac{1}{2} \end{cases}$$

where $d_i$ is the normalized distance and $m_i$ the minimal local similarity for the $i^{th}$ attribute $A_i$, $1 \le i \le M$. In this example, numerical similarity values are defined for values that are both greater than and less than the query value. Additionally, in this case the functions are symmetric (i.e., $d(v_Q, v_{Omin}) = d(v_Q, v_{Omax})$). In other words, an object value $v_O$ a distance d above the query value $v_Q$ will result in the same similarity value as an object value $v_O$ a distance d below the query value $v_Q$ (e.g., object values of 8,000 and 12,000 will both produce the same similarity value for a query value of 10,000). Thus, the range can be determined by adding and subtracting the denormalized distance from the query value. In other words, if the denormalized distance, $d$, between an object value $v_O$ and a query value $v_Q$ is known, we can calculate the minimum and maximum range as follows:

$$v_{Omin} = v_Q - d,$$

$$v_{Omax} = v_Q + d.$$

Inverse similarity functions for other types of functions may also be used to obtain ranges. For example, the inverse function for a matrix may return a list of object values that have a local similarity greater than the minimal local similarity. To obtain a range of values for a matrix, the entries in the matrix for a given attribute may be examined iteratively, and if a matrix entry corresponding to $(v_Q, v_O)$ is greater than the minimal local similarity, then $v_O$ is included in the range. Inverse functions for a taxonomy are similar to inverse functions for a matrix in the sense that such functions may also return a list of object values for a respective attribute, A, that has a local similarity with respect to the query that is greater than the minimal local similarity. Such objects may be obtained by traversing the taxonomy, starting at the query node, for example, and working toward the root until a node is encountered with a numerical local similarity value that is below the required minimal local similarity. The range may include all child nodes reachable from the current node.

Embodiments of the present invention include techniques for determining threshold values. For example, in one embodiment the present invention includes estimating a global similarity threshold, T, for which at least K results are obtained. The following is an example. First, a volume of the M-pyramid is calculated based on the assumption that the objects are homogeneously distributed in the M-cube. Since the volume of an M-cube is equal to 1, a relevant volume, $v$, of the M-pyramid may be determined according to the following:

$$v = \frac{K}{N};$$

where K is the number of desired results and N is the total number of objects in the information base. Next, global similarity threshold, T, may be calculated using the following volume formula:

$$v = \frac{(1 - \tau)^M}{M! \prod\limits_{i=1}^{M} w_i}.$$

For a degenerated M-pyramid, the volume may be obtained using triangulation methods of polytope volume computation. For a given volume, $V_\sigma$ an approximation search for the threshold value may be performed because $V_\sigma$ is a strictly decreasing function of $\sigma$.

The initial threshold value may be verified by calculating the probability of obtaining K results. For example, the probability, p, of finding a randomly selected object above the M-plane is,

$$p = v/1,$$

wherein $v$ is the volume of the corresponding M-pyramid and 1 represents the volume of the complete M-cube. Using a binomial distribution with a probability of success, p, the probability of having at least K results above a given threshold is,

$$\Pr(K) = \binom{K}{N} p^K (1-p)^{N-K} ;$$

or equivalently, given that p = v,

$$\Pr(K) = \binom{K}{N} v^K (1-v)^{N-K} ;$$

$$\Pr(K) = 1 - \sum_{i=0}^{K-1} \binom{i}{N} v^i (1-v)^{N-i} ;$$

wherein the last equation illustrates that the probability of at least K results may be calculated by subtracting the cumulative probabilities of less than K results. To find a threshold value, an approximation search for an M-pyramid may be conducted. When an M-pyramid having a volume, v, that results in a sufficiently high probability (i.e., greater than some threshold probability) of returning at least K results is found, the corresponding threshold value may be used as the starting value for generating the local similarity values for the count-only query.

According to one embodiment of the present invention, the count-only query is performed after a starting value for the threshold is generated. However, if the count-only query returns $k$ results, wherein $k < K$, then the initial threshold value should be changed. According to one possible approach, the volume, $v$, of the M-pyramid is increased by the following amount:

$$dv = v \cdot \frac{dK}{k} ;$$

where $dv$ is the change in volume of the M-pyramid, $v$ is the volume of the current M-pyramid and $dK = K - k$.

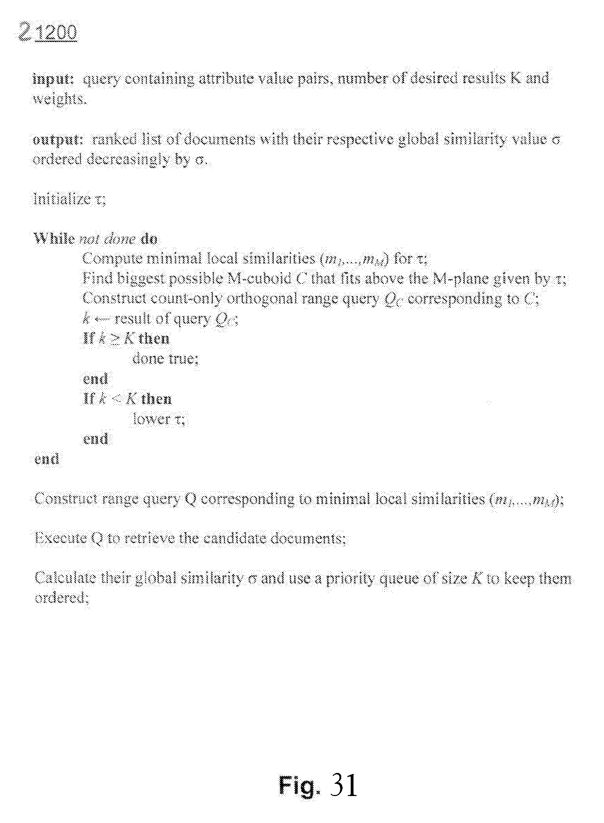

Fig. 31 is example pseudo code for retrieving information according to one specific embodiment of the present invention. The input of algorithm 21200 is a query containing pairs consisting of an attribute and a value assigned to that attribute (e.g., the pair "Price" and "$10,000"), the number of desired results K, and a set of weights to be attached to the respective attributes. In this example, the output is a ranked list of documents with their global similarity value o ordered decreasingly by o. First, the threshold value T is initialized. Heuristic approaches may be used for initialization, for example, or the initialization techniques discussed above may be used. Next, the algorithm computes minimal local similarities, finds the biggest possible M-cuboid above the M-plane and constructs a count-only orthogonal query based on the current value of T. If the number of results $k$ is greater than or equal to the desired number of results, then a loop control variable "done" is set equal to "true" and the current value of T is used. However, if the number of results $k$ is less than the desired number of results, then the value of T is lowered and the calculations are repeated. When at least K desired results are obtained, then a retrieval query is constructed across a range corresponding to minimal local similarities ($m_1,...,m_M$).

Finally, a priority queue is used during the calculation of the global similarity of each document so that the final result is a ranked list of K documents ordered decreasingly by σ.

The following is a specific numerical example to illustrate some of the concepts discussed above. In this example the following query will be used with the desired number of results K = 5:

| Attribute | Query Value | Attribute Weight Weight |
|---|---|---|
| Price | 10000 | 0.7 |
| Color | Red | 0.3 |

In this example, the information base is an index database. An index database organizes attributes of each object in a table with several columns representing the respective attributes for the particular index object. For example, an object in an index database may include attributes of a document such as creation date, author, model information, price information and a pointer to the contents of the document. Thus, the index supports string, integer, float, date and price attribute types. For the present example an index with N = 100 objects (e.g., cars) will be used. First the initial threshold value is calculated by assuming that the objects in the index are approximately homogeneously distributed. The entire space has a volume of 1, which corresponds to 100 cars. Since the desired number if results K = 5, then our volume is given by:

$$v = \frac{K}{N} = \frac{5}{100} = 0.05 .$$

Using this volume, the initial threshold value may be calculated as follows:

$$\tau = 1 - \sqrt[M]{v \cdot M! \prod_{i=1}^{M} w_i} = 1 - \sqrt[2]{(0.05) \cdot (2!) \cdot (0.7) \cdot (0.3)} = 0.855 .$$

For this threshold value, the probability of obtaining at least K = 5 results can be calculated as follows:

$$\Pr(K) = 1 - \sum_{i=0}^{K-1} \binom{i}{N} v^i (1-v)^{N-i} = 0.97 ;$$

where N=100, K=5 and $v$ = 0.05.

In this example, similarity values are obtained from the largest possible M-cuboid that fits above the M-plane defined by the global similarity threshold value T = 0.855. Using the M-equalities provided above for the largest possible M-cuboid the similarity values are given by:

$$s_1 = 1 - \frac{1 - (0.855)}{2 \cdot (0.7)} = 0.896 ;$$

$$s_2 = 1 - \frac{1 - (0.855)}{2 \cdot (0.3)} = 0.758 .$$

The count-only query is constructed for the M-cuboid ($<s_1, s_2>$,<1,1>). Using inverse functions, the price interval may be [8,000, 12,000], for example, and the color interval [red]. Of course, the intervals depend on the particular inverse functions used. Thus, the count-only query is performed as follows:

*price IN [8,000, 12,000] AND color IN [red]*

If the query returns less than K = 5 results, then the threshold value T may be changed.

Next, minimal local similarities for the threshold value T = 0.855 are calculated. In this example, the minimal local similarities are calculated using the following formula:

$$m_i = [\tau - (1 - w_i)]/ w_i.$$

$$m_1 = [\tau - (1 - w_1)]/ w_1 = [0.855 - (1 - 0.7)]/0.7 = 0.792$$

$$m_2 = [\tau - (1 - w_2)]/ w_2 = [0.855 - (1 - 0.3)]/0.3 = 0.516$$

Using these minimal local similarities, the corresponding ranges may be calculated using inverse similarity functions, which may produce an interval of [5000, 15000] for price and [red, orange] for color. Thus, the retrieval query is performed as follows:

*price IN [5,000, 15,000] AND color IN [red, orange],*

which may produce 20 results, for example. The results may be rated individually while keeping the best 5 in a priority queue as follows:

| Document ID | Global Similarity | Price | Color |
|---|---|---|---|
| 10 | 0.99 | 11,000 | Red |
| 54 | 0.90 | 8,000 | Red |
| 12 | 0.87 | 9,500 | Orange |
| 77 | 0.86 | 8,500 | Orange |
| 3 | 0.80 | 14,000 | Red |

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. For example, information retrieval methods according to the present invention may include some or all of the innovative features described above. Based on the above disclosure and the following claims, other arrangements, embodiments, implementations and equivalents will be evident to those skilled in the art and may be employed without departing from the spirit and scope of the invention as defined by the claims.

**Claims**

**1.** An invoice management system (210, 700), comprising:

- an invoice data repository (212, 720) adapted to store the transformed invoice data;
- a context builder (214, 730, 900) in operative connection with the invoice data repository and with a number of additional electronically accessible data sources (220, 221), the context builder being adapted to automatically retrieve additional information corresponding to the invoice data in accordance with required invoice data fields; and
- an invoice processor (213, 750, 910, 1000, 1150) in operative connection with the invoice data repository and the context builder, the invoice processor being adapted to verify each invoice according to a plurality of rules on the basis of the invoice data and the additional information and to create an exception for each unsuccessfully verified invoice.

**2.** The invoice management system according to claim 1, further comprising a unifier (211, 710, 800) in operative connection with the invoice data repository, including a plurality of receiver modules (801-805) adapted to receive invoice data from a plurality of different sources (200A-200E) in a plurality of different formats, the unifier further including a transformation engine (810) operable to transform the invoice data into a common format with predefined data fields (1314-1320, 1510, 1511) for storing in the invoice data repository.

**3.** The invoice management system according to claim 1 or 2, further comprising an exception manager (215, 760, 1120) in operative connection with the invoice processor and adapted to process the exception.

**4.** The invoice management system according to any one of claims 1 to 3, further comprising an index database (216, 904) of processed invoices in operative connection with at least one of the context builder, the invoice processor, and the exception manager.

**5.** The invoice management system according to claim 3 or 4, **characterized in that** the exception manager is operable to perform for each exception at least one of a plurality of exception handling procedures.

**6.** The invoice management system according to any one of claims 1 to 5, further comprising an exception repository (1110) in operative connection with the invoice processor, the exception repository being adapted to store information corresponding to respective exceptions.

**7.** The invoice management system according to claim 6, **characterized in that** the exception repository is operatively connected with the exception manager.

**8.** The invoice management system according to any one of claims 3 to 7, **characterized in that** the exception manager is adapted to perform a data reduction on the invoice data and/or on the additional information which is to be operated on by a respective exception handling procedure in accordance with an exception type.

**9.** The invoice management system according to any one of claims 1 to 8, **characterized in that** the context builder is adapted to autopopulate data fields in the transformed invoice data based on the additional information.

**10.** The invoice management system according to any one of claims 3 to 9, **characterized in that** the exception manager is adapted to automatically provide a user (U1, U2, U3) with a notification (1300E, 1500B, 1700C) relative to an invoice exception status and with notification data comprising at least some amount of the transformed invoice data (1325A, 1325B, 1501) and at least some amount of the additional data (1326A, 1325B, 1502) in accordance with an exception type.

**11.** The invoice management system according to claim 10, **characterized in that** the exception manager is adapted to receive a response signal (1374, 1375) to said notification, said response signal comprising information in connection with the invoice status.

**12.** The invoice management system according to any one of claims 3 to 11, **characterized in that** the exception manager is adapted to change the invoice data and/or the invoice exception status.

**13.** A method of processing invoices, comprising:

- storing invoice data corresponding to a plurality of invoices in a repository (212, 720);
- automatically retrieving additional information corresponding to each invoice from a plurality of electronically accessible systems (220, 221); and
- automatically performing a plurality of verification checks on each invoice using the additional information.

**14.** The method according to claim 13, further comprising, prior to storing the invoice data:

- receiving the invoice data from a plurality of different sources (200A-200E) in a plurality of different formats; and
- transforming the invoice data into a common format with a number of data fields (1314-1320, 1510, 1511).

**15.** The method according to claim 13 or 14, **characterized in that** the invoice data is stored in a format suitable for electronic data processing and **in that** verification is performed on a data processor software component (213, 750, 910, 1000, 1150).

16. The method according to any one of claims 13 to 15, **characterized in that** if the invoice is verified the invoice is automatically posted, and if the invoice data is not verified an electronic exception case is created.

17. The method according to any one of claims 13 to 16, further comprising creating an exception case when the invoice fails at least one of the verification checks.

18. The method according to any one of claims 13 to 17, further comprising automatically processing the exception case in accordance with one of a plurality of exception handling procedures.

19. The method according to claim 18, **characterized in that** the exception handling procedure is initiated based on at least one verification check failed by the invoice.

20. The method according to claim 18 or 19, **characterized in that** one of the exception handling procedures includes displaying invoice data corresponding to the invoice to a user in an exception user interface (1310).

21. The method according to any one of claims 18 to 20, **characterized in that** one of the exception handling procedures includes transmitting an interactive form (1700C) comprising data relative to the invoice to a user (U1, U2, U3).

22. The method according to any one of claims 18 to 21, **characterized in that** one of the exception handling procedures includes transmitting invoice data to a user and receiving a digital signature in connection with an exception status of the invoice.

23. The method according to any one of claims 18 to 22, **characterized in that** at least one of the exception handling procedures is specified by a user.

24. The method according to any one of claims 18 to 23, **characterized in that** the exception handling procedures are role based.

25. The method according to any one of claims 13 to 24, **characterized in that** the invoice data is temporarily queued in the repository prior to verification.

26. The method according to any one of claims 13 to 25, further comprising automatically populating data fields of the invoice with the retrieved additional information corresponding to the invoice.

27. The method according to any one of claims 13 to 26, **characterized in that** the additional information corresponding to the invoice includes document context, organizational context or people context.

28. The method according to any one of claims 13 to 27, **characterized in that** the additional information is used to determine an invoice status and an exception handling procedure of/for each invoice.

29. The method according to any one of claims 13 to 28, **characterized in that** the additional information corresponding to each invoice includes a purchase order number, a purchase order, a purchase order history, a goods receipt, a service confirmation, a requisition, a shipping notice, a delivery notice, a contract, business partner information, contact information or vendor data.

30. The method according to any one of claims 13 to 29, **characterized in that** at least one of the verification checks is specified by a user.

31. The method according to any one of claims 13 to 30, **characterized in that** the verification checks comprise:

        - storing predefined values; and
        - comparing the predefined values to corresponding invoice data.

32. The method according to any one of claims 13 to 31, **characterized in that** the verification checks include comparing the invoice against a template.

33. The method according to any one of claims 13 to 32, **characterized in that** the verification checks include a missing data check, an invalid data check (504), a duplicate invoice check (505), a non-purchase order check (506), a line item mismatch check (507), a price variance check (508), a quantity variance check (509), an authorization check, a missing goods received check or a missing services check.

34. The method according to any one of claims 13 to 33, wherein the invoice data and/or the additional information is retrieved by:

   ● specifying a first query including one or more specified attribute values corresponding to one or more attributes;
   ● performing a count-only query on a structured information base for information elements having one or more attribute values within a first range, the first range including the specified attribute values; and
   ● performing a retrieval query for information elements having one or more attribute values within a second range, wherein the second range includes the first range.

35. The method of claim 34, wherein the count-only query returns a value equal to the number information elements having a global similarity to the first query greater than a threshold value.

36. The method of claim 35, wherein the threshold value is equal to a sum of weighted local similarity values.

37. The method of claim 35, wherein the first range is generated using one or more local similarities.

38. The method of claim 37, wherein the first range is generated using inverse similarity functions.

39. The method of claim 34, wherein the second range is generated using one or more minimal local similarities.

40. The method of claim 39, wherein the second range is generated using inverse similarity functions.

41. The method of claim 34, wherein an initial threshold value is based on a probability of obtaining a minimum number (K) of information elements.

42. The method of claim 41, wherein the initial threshold value is changed if the count-only query returns a value that is less than the minimum number (K).

43. The method of claim 34, wherein the first query specifies a minimum number (K) of information elements to be retrieved.

44. The method of claim 34, wherein the first query includes one or more weights corresponding to the one or more attributes.

45. The method of claim 34, further comprising defining a similarity model, wherein the similarity model comprises one or more local similarity functions or inverse similarity functions corresponding to the one or more attributes in the first query.

46. The method of claim 34, wherein the one or more local or inverse similarity functions include a numeric function, a matrix or a taxonomy.

47. The method of claim 34, wherein the first query includes M attribute values corresponding to M attributes and the first and second ranges are M-dimensional.

48. The method according to any one of claims 13 to 47, wherein the invoice data and/or the additional information is retrieved by:

   ● specifying a first query including one or more specified attribute values corresponding to one or more attributes;
   ● generating a threshold value;
   ● generating a local similarity value for each of the one or more attributes based on the threshold value;
   ● generating a first range based on each local similarity value, the first range including the specified attribute values;
   ● performing a count-only query on a structured information base for information elements having one or more attribute values within the first range; and
   ● performing a retrieval query for information elements having one or more attribute values within a second range, wherein the second range includes the first range.

49. The method of claim 48, wherein the threshold value is based on a global similarity threshold, wherein the global similarity threshold is equal to a sum of weighted local similarity values.

50. The method of claim 48 or 49, wherein the first query specifies a minimum number (K) of information elements to be retrieved.

51. The method of claim 48, 49, or 50, wherein the first query includes one or more weights corresponding to the one or more attributes.

52. The method of claim 48 wherein the first query includes M attribute values corresponding to M attributes and the first and second ranges are M-dimensional.

53. A computer program product, comprising computer executable instructions for performing a method in accordance with any one of claims 13 to 52.

Paper Inv.

Vendor — 101

Invoice System — 102

Manual Exception Processing — 103

Telephone Vendor — 104

Signature Authorizations — 105

# FIG._1
## (PRIOR ART)

FIG._2A

EP 1 659 526 A2

**FIG._2B**

Invoice Management System — 210

Integration Layer — 260

Company Employees — 261

Other Software Systems and Applications — 262

Vendor Employees — 263

Receive Invoice Data from Different Sources and in Different Formats — 310

Transform the Invoice Data into a Common Format — 320

Store the Transformed Invoice Data in a Repository — 330

Automatically Retrieve Context Information Corresponding to Each Invoice — 340

Automatically Verify the Invoice Data — 350

**FIG._3**

Invoice Verified ? — 360

No → Create Exception and Notify User — 370

Yes ↓

Post Verified Invoice Data — 380

*FIG._4*

## FIG._5

Retrieve Invoice Data and Context — 501

Template Check — 502

Missing Data Check — 503

Invalid Data Check — 504

Duplicate Invoice Check — 505

Non-PO Invoice Check — 506

Line Item Mismatch Check — 507

Price Variance Check — 508

Quantity Variance Check — 509

Post Invoice — 510

Exception 520 —

Store Exception — 521

## FIG._6

Retrieve Exception from Exception Repository — 601

Create Case Management Entry — 602

Start Exception Work Flow to Resolve the Exception in Collaboration with Involved Parties — 603

604 — Exception Resolved ?

No → Update Case Information — 605

Update Case Information — 607

Escalate Exception to Another Level — 606

Update Invoice Data Repository with Information From Work Flow — 608

Restart Invoice Verification — 609

*FIG._7*

*FIG._8*

*FIG._9*

**FIG._10**

**FIG._11**

1201A

Paper Inv.

Invoice
Entry

1202

1201B

Electronic
Invoice

IMS Inv.
Processing

1203

1206

Inbox ←— Notify ←— Inbox ←— Notify ←— Duplicate
Detected

1205

1204

1207

Dupl.
?

No
Dispute

Inbox

1208

Yes

Confirm

IMS

1210

1209

**FIG._12**

1300A

Welcome! Jeffrey Word

Help | Personalize | Log Off

SAP

Home | Corporate Services | Accounts Payable

A/P Desk | Search | Reports | Workflow Manager

1310

You are here:

A/P Inbox:

1301

Double Click on a row to view invoice details and its related documents. Use the checkboxes to act on many invoices at a time.

A/P Inbox(241) — 1302

Blocked Invoices(15) — 1303

Forwarded to Vendor(0) — 1304

In Dispute(0) — 1305

Cleared for Payment(72) — 1306

Deleted(0) — 1307

Show:  24    4    14    6

1324   1321

Enter a New Invoice | Post Invoices | Delete Invoices

1322   1323

Search for:

Go

Show Advanced Search

You can(1):

Enter a New Invoice

Open(1):

Invoice SAP33-2004

| | Exception | Source | Invoice Number | Invoice Date | Amount | Vendor | Description |
|---|---|---|---|---|---|---|---|
| ☐ | Duplicate | Fax/OCR | SAP33-2004 | 04/05/2004 | $11420.00 | Palo Alto Cleaning Inc | Cleaning March 2004 |
| ☐ | Missing Information | EDI | KE4711-2004 | 05/10/2004 | $14000.60 | Kry's Electronics | Computer Accessories |
| ☐ | Missing Information | EDI | L1-16995 | 05/10/2004 | $20000.00 | Californian Business Services | F1 Program TE |
| ☐ | Missing Information | EDI | 357 | 05/10/2004 | $21434.52 | The Clarity Group | Facilitation BPR Offsite Meeting / 53775 |
| ☐ | Duplicate | Paper/OCR | 87447565 | 05/10/2004 | $25642.40 | RTFM Industrial Supplies | Order#: 87447565 |
| ☐ | Duplicate | Fax/OCR | 03-SAW13 | 05/10/2004 | $30632.50 | Application Consulting | 03-SAW13 |
| ☐ | Missing Information | EDI | 900007676 | 05/10/2004 | $31030.20 | Phoenix Computer Inc | Switch Avocent 16-P Digital |
| ☐ | Missing Information | Paper/OCR | cusa0815 | 05/10/2004 | $39000.80 | CompCA Computer Biz | D-Link Video 2001 |
| ☐ | Missing Information | EDI | 76645372 | 05/10/2004 | $40000.00 | Better Movers | CRM Move - Q1, #455366 |
| ☐ | Missing Information | Paper/OCR | 2004032776S | 05/10/2004 | $41377.50 | Willy Services Inc | Peterson/Vegas - WE 3/27/04 |
| ☐ | Missing Information | EDI | efa43930 | 05/10/2004 | $42867.50 | EFA Consulting Inc | IO 5557399 / Sapphire |
| ☐ | Line Items Mismatch | Paper/OCR | 2004-OSC-0815 | 05/07/2004 | $43000.00 | Office Supplies Corporated | Office Supplies |
| ☐ | Line Items Mismatch | XML | 9607328172555584 | 05/07/2004 | $43900.00 | ABC Atlantic Bell (Voice) | 9607328172555/OFFICETEL/0063 |
| ☐ | Missing Information | XML | 0394 | 05/07/2004 | $44549.38 | Stay Informed Technology | 20040520019x |
| ☐ | Line Items Mismatch | Paper/OCR | 11639600003 | 05/07/2004 | $45760.00 | BUU TELECONFERENCE SERVICES | 11639800003/AUDIOCONF/0063 |
| ☐ | Duplicate | EDI | 9018001169 | 05/07/2004 | $46750.00 | SAP Norge A/S | 9018001169-IO5536 |
| ☐ | Line Items Mismatch | Fax/OCR | 139061 | 05/07/2004 | $46974.56 | WHEELCASE FINANCIAL SERVICES | LEASE 12373/002-004 008-016 MARCH 2004 49-5755 |
| ☐ | Missing Information | EDI | sf2004-2543769 | 05/07/2004 | $46000.22 | StealTech System | 2004flashcard0367 |

1313   1312   1311

FIG._13A

1314   1315   1316   1317   1318   1319   1320

48

EP 1 659 526 A2

FIG._13B

FIG._13C

FIG._13D

EP 1 659 526 A2

1375 — Delete Invoice   Reject Duplicate — 1374

1300E

From:                                                          Sent:  Wed 4/21/2004 8:46 AM
To:
Cc:

1371   Subject:   IMS Alert: Duplicate Invoice #SAP33-2004 Received

1372
Dear Rob,

Invoice SAP33-2004 received via fax is potentially a duplicate.   Differences between invoices are shown in yellow.

Scanned invoices follow the duplicates summary.
Click "Clear Duplicate" or "Not a Duplicate" to resolve this issue.

Regards,
Kevin

1325A                                                          1325B

1373

New Invoice                              IMS Status: Duplicate      Original Invoice                          IMS Status: Posted

| Invoice number: SAP33-2004 | Customer: Sap Labs LLC | | Invoice number: SAP33-2004 | Customer: Sap Labs LLC |
| Acc. document: n/a | Address: 3410 Hillview Ave, | | Acc. document: 0018220065 | Address: 3410 Hillview Ave, |
| PO: n/a | Palo Alto, CA 94304 | | PO: n/a | Palo Alto, CA 94304 |
| Requisitioner: n/a | Phone: 650-3203000 | | Requisitioner: n/a | Phone: 650-3203000 |
| Invoice Date: April 5, 2004 | Fax: 650-3203001 | | Invoice Date: April 5, 2004 | Fax: 650-3203001 |
| Posting Date: n/a | E-mail:kevin.chen@sap.com | | Posting Date: April 11, 2004 | E-mail:kevin.chen@sap.com |
| Vendor ID: 0090569691 | | | Vendor ID: 0090569691 | |

| Item | Quantity | Description | Unit Price | Amount | | Item | Quantity | Description | Unit Price | Amount |
|---|---|---|---|---|---|---|---|---|---|---|
| 1 | 250 Hours | Cleaning Deer Creek RD 3475 - March 1-30, 2004 | 21 | $5250 | | 1 | 250 Hours | Cleaning Deer Creek RD 3475 - March 1-30, 2004 | 21 | $5250 |
| 2 | 140 Hours | Cleaning Hillview Ave. 3410 - March 1-30, 2004 | 21 | $2940 | | 2 | 140 Hours | Cleaning Hillview Ave. 3410 - March 1-30, 2004 | 21 | $2940 |
| 3 | 130 Hours | Cleaning Hillview Ave. 3401 - March 1-30, 2004 | 21 | $2730 | | 3 | 130 Hours | Cleaning Hillview Ave. 3401 - March 1-30, 2004 | 21 | $2730 |
| 4 | 20 Hours | Window cleaning Deer Creek RD 3475 | 25 | $500 | | 4 | 20 Hours | Window cleaning Deer Creek RD 3475 | 25 | $500 |

Mail payment to:        Terms of Payment:          Subtotal $11,420       Mail payment to:        Terms of Payment:          Subtotal $11,420
Palo Alto Cleaning Inc.   Net 30                     Tax (n/a)  00.00       Palo Alto Cleaning Inc.   Net 30                     Tax (n/a)  00.00
300 Hanover Street,                                 Shipping  00.00       300 Hanover Street,                                 Shipping  00.00
Palo Alto, CA 94304-1135                            Miscellaneous  00.00   Palo Alto, CA 94304-1135                            Miscellaneous  00.00
Phone: 650.123.5678                                 Balance Due $11,420    Phone: 650.123.5678                                 Balance Due $11,420
Fax: 650.123.5679                                                          Fax: 650.123.5679

**FIG._13E**

1326A                                                          1326B

FIG._13F

**FIG._14**

1500A

Welcome! Jeffrey Word          Help | Personalize | Log Off   SAP

Home    Corporate Services    Accounts Payable
AP Desk  |  Search  |  Reports  |  Workflow Manager

1501

You are here:

Exception Analysis

Detailed Invoice

Search for:

[Go]

Show Advanced Search

You can(2):
Enter a New Invoice
Make a Template from this Invoice

Open(1):
Invoice SAP33-2004

**Posting Failed! Important information was missing. Invoice was returned to the vendor on May 13, 2004.**

Missing Information: missing entries are marked in yellow. The vendor has been notified and will be reminded of the problem every 2 days until the invoice can be posted.

**New Invoice**                                    IMS Status: Pending vendor updates

Invoice number: FRGH5012004            Customer: SAP Labs LLC.
Acc. document: n/a          1510       Address: 3745 Deer Creek Rd.
PO: [    ]                   1511                Palo Alto, CA 99988
Requisitioner: [    ]                  Phone: 650-3203119
Invoice Date: May 12, 2004               Fax: 650-3203120
Posting Date: n/a                      E-mail: jeffrey.word@sap.com
Vendor ID: 0090569691
Description:

| Item | Assigned to | Description | Total |
|---|---|---|---|
| 1 | Cost Center 4220 | PROPERTY TAX FEB. 2004 YR. 2003-2004 90569691 | 146150.98 |

Mail payment to:              Terms of Payment:
Plasteco                      Net 60                    Subtotal  146150.98
983 Plasteco Dr.,                                       Tax (n/a)    00.00
Suite 305                                               Shipping     00.00
Wayne, NJ 08648                                         Miscellaneous  00.00
Phone: +1-609-844-0400                                  Balance Due  146150.98
Fax: +1-609-844-0415

*FIG._15A*

EP 1 659 526 A2

1510 — Send Updated Invoice

1500B —

From:                                                        Sent: Fri 3/26/2004 8:10 AM

To:

Cc:

Subject:   IMS: Invoice 0016022738 has important information missing

1502     Invoice 0016022738 was entered without a PO or a requisition contact name.

Missing entries are marked in yellow. Please enter the missing information and click "Post Updated Invoice" to avoid payment delays. Click the invoice link - 0016022738 - to see more details.

1504 — New Invoice: 0016022738

| | | Customer: ABC Inc. | Service Provider: Invoices Inc. |
|---|---|---|---|
| Invoice Number: 333x | | Address: 3745 Deer Creek Rd. | Address: 728 Nenley Way |
| Acc. document: 0016022738 | 1503 | Palo Alto, CA 99988 | Palo Alto, CA 99988 |
| PO: | | Phone: 650-3203119 | Phone: 650-3200000 |
| Requisitioner: | | Fax: 650-3203120 | Fax: 650-3204444 |
| | 1503 | E-mail raghu@abcinc.com | E-mail michelle@invoices.com |
| Issue Date: 2003-11-17 | | | |
| Payment Data: 2003-11-19 | | | |
| Vendor ID: 0090669691 | | | |

1501

| Item | Assigned to | Description | Amount |
|---|---|---|---|
| 1 | Cost Center 4220 | PROPERTY TAX FEB. 2004 YR. 2003-2004 90669691 | 148160.98 |

Mail payment to:                         Terms of Payment:                   Subtotal 148160.98

Plasteco                                    Net 60                               Tax (n/a)   00.00

989 Plasteco Dr.,                                                   Shipping   00.00

Suite 305                                                 Miscellaneous   00.00

Wayne, NJ 08648                                          Balance Due 148160.98

Phone: +1-609-844-0400

Fax: +1-609-844-0415

*FIG._15B*

FIG._16

EP 1 659 526 A2

Welcome! Jeffrey Word    Help | Personalize | Log Off    SAP

Home    Corporate Services    Accounts Payable
AP Desk | Search | Reports | Workflow Manager

You are here:    Blocked Invoices:

AP Inbox(24)    Double Click on a row to view invoice details and its related documents. Use the checkboxes to act on many invoices at a time.

Blocked Invoices(15)    Show:    15    1    3    11    0    0    0

Forwarded to Vendor(0)    [ Enter a New Invoice ]  [ Post Invoices ]  [ Delete Invoices ]

In Dispute(0)

Cleared for Payment(72)

Deleted(0)

Search for:

[        ]  Go
Show Advanced Search

You can(1):
Enter a New Invoice

Open(1):
Invoice SAP03-2004

| Block | Days Blocked | Current Owner | Invoice Number | Payment Date | Amount | Vendor | Description |
|-------|------|------|------|------|------|------|------|
| ☐ Missing S&E | 13 | Julie | KE4711-2004 | 06/01/2004 | $11738.60 | Kry's Electronics | Computer Accessories |
| ☐ Missing G/R | 4 | Julie | L1-16995 | 06/10/2004 | $11744.28 | Californian Business Services | F1 Program TE |
| ☐ Missing G/R | 34 | Julie | 357 | 05/10/2004 | $11434.62 | The Clarity Group | Facilitation BPR Offsite Meeting / 53775 |
| ☐ Missing S&E | 34 | Julie | 900007676 | 05/10/2004 | $11130.20 | Phoenix Computer Inc. | Switch Avocent 16-P Digital |
| ☐ Missing G/R | 34 | Julie | cusa0815 | 05/10/2004 | $11898.80 | CompCA Computer Biz | D-Link Video 2001 |
| ☐ Missing S&E | 34 | Julie | 78645372 | 05/10/2004 | $11665.49 | Bellex Movers | CRM Move - Q1, #455366 |
| ☐ Missing S&E | 34 | Julie | 20040327765 | 05/10/2004 | $11877.60 | Witty Services Inc. | Peterson/Vegas - W&E 3/27/04 |
| ☐ Missing S&E | 37 | Julie | efad3996 | 05/10/2004 | $11867.60 | EFA Consulting Inc. | IO 5557399 / Sapphire |
| ☐ Missing S&E | 37 | Julie | 0294 | 05/07/2004 | $11549.99 | Stay Informed Technology | 20048520019x |
| ☑ Approval | 37 | Jeff | 9018001169 | 05/07/2004 | $11759.00 | SAP Norge A/S | 9018001169-IO5536 |
| ☐ Missing S&E | 37 | Heinz | st2004-2343765 | 05/07/2004 | $11203.72 | StealTech System Consulting | 2004/foobar/0367 |
| ☐ Missing S&E | 37 | Heinz | DOC-SAPBUN/0668 | 05/07/2004 | $11985.00 | Planet Communication GmbH | DOC-SAPBUN/0668 |
| ☐ Missing S&E | 37 | Heinz | 2004-01-WA-003 | 05/07/2004 | $11935.20 | Global Travel Services | Travel Knallinger |
| ☐ Missing S&E | 38 | Julie | 1192004 | 05/06/2004 | $11020.00 | NPN GRAND INC. | Dinner Meeting-FKOM-Jan1901-Las Vegas/561236 |
| ☐ Missing S&E | 38 | Heinz | THE 28032004 | 05/06/2004 | $11484.80 | TRIDENT ENTERPRISE NETWORKS, LLC | Maintenance 9/25/03-11/13/03/4500559045 |

Click a row to view an invoice. Double click to open the invoice in a larger view.    Page 1 / 1

1721  1722  1723  1724  1725  1726  1727  1728

*FIG._17A*

EP 1 659 526 A2

1700B

Help | Personalize ▲ | Log Off

SAP

Home | Corporate Services | Accounts Payable

A/P Desk | Search | Accounts | Setting | Reports

↖ You are here:

Detailed Invoice

Detailed Line Items

PO

Scanned Invoice

Search for:

[ Go ]

Show Advanced Search

You can(2):

Open the Original Invoice

Close this Invoice

Open(1):

Invoice SAP33.2004

Invoice was blocked on 3/12/2004. Approval is needed for one or more line items. — 1731   — 1730

Write a note to **Steve** - the Cost Center Manager (optional): [ Send a Reminder ]

Items that need approval are marked in yellow. Invoice was entered manually.

**Detailed Invoice View**                                    IMS Status: Invoice is blocked

Invoice number: 5556                Customer: SAP Labs LLC.
Acc. document: n/a                Address: 3245 Deer Creek Rd.
PO: 490000010                        Palo Alto, CA 99988
Requisitioner: Judy Chen            Phone: 650-3203119
Invoice Date: April 5, 2004            Fax: 650-3203120
Posting Date: n/a                    E-mail: jeffrey.word@sap.com
Vendor ID: 0090569691

| Block | Description | Quantity Invoiced | Approved | UOM | Rate | Total |
|---|---|---|---|---|---|---|
| 1 | Need Approval | Meet with city; review GG applicability, registration prep, 3/12/2004 | 5 | - | Hours | 135.00 | $675.00 |
| 2 | Need Approval | Meet with city; review GG applicability, registration prep, 3/17/2004 | 3 | | Hours | 135.00 | $405.00 |
| 3 | | Meet with city; review GG applicability, registration prep, 3/18/2004 | 1 | 1 | Hours | 135.00 | $135.00 |
| 5 | | Meet with city; review GG applicability, | 1 | 1 | Hours | 135.00 | $135.00 |

Invoice Log

| Date | Event | Contact |
|---|---|---|
| May 13, 2004 | Invoice arrived by fax. Entered using OCR. | Jeff |
| May 13, 2004 | Duplicate found | Jeff |

Contacts

Add another contact:

Name:

Email:

[ Add Contact ]

| Chat | Send Email | Role | Contact |
|---|---|---|---|
| | ✉ | Vendor | Rob P. |
| | ✉ | Cost Center Manager | Steve |
| | ✉ | Receiving | Julie |
| | ✉ | Requisitioner | Judy |
| | ✉ | Invoicer | Jeff |

Online   Offline   ✉ Send Email

*FIG._17B*

FIG._17C

Paper Inv. — 1801A → Invoice Entry — 1802 → IMS Inv. Processing — 1803 ← Electronic Invoice — 1801B

Line Item Mismatch — 1804

Inbox — 1805B    Inbox — 1805A

Problem Fixed ? — 1806

No → Inbox — 1807

Yes

Resolve — 1808

IMS Inv. Processing — 1809 — 1810 Post

**FIG._18**

Paper Inv. — 1901 → IMS Inv. Processing — 1902

Missing GR — 1903    Inbox — 1906

Wait — 1904    Wait — 1907    Inbox — 1909

Cleared ? — 1905    Cleared ? — 1908    Resolve — 1910

No    No

Yes    Yes

IMS Inv. Processing — 1911

Post — 1912

**FIG._19**

61

Fig. 20

Specify Query
2210

Count-Only Query for
First Range of
Information Elements
2220

Retrieval Query for
Second Range of Information
Elements
2230

**Fig.** 21

Specify Query Attribute Values
310

Generate Threshold Value
320

Generate Local Similarity
330

Generate Range for Count Only
Query using Inverse Similarity
Functions
340

Count-Only Query for
First Range
350

Fig. 22

Threshold Value
410

Generate Minimal Local Similarity
420

Generate Second Range using
Inverse Similarity Functions
430

Retrieval Query on
Second Range
440

Fig. 23

Select Initial Threshold

510

Determine the Probability of Obtaining a Minimum Number (K) of Information Elements

520

Change Threshold Value

540

N

$Pr(K) > P_o$

530

Y

Perform Count-Only Query and Determine Number (N) of Information Elements Returned

550

Change Theshold Value incrementally

570

N

560

$N \geq K$

Y

Threshold OK

580

Fig. 24

| Attribute | Query Value | Attribute Weight |
|-----------|-------------|------------------|
| Price | 10,000 | 0.7 |
| Color | Red | 0.3 |
| Minimum Number of Desired Results K = 4 | | |

2601

Data Store

2602

| Result# | Price | Color |
|---------|-------|-------|
| 1 | $10,000 | Red |
| 2 | $9,500 | Black |
| 3 | $9,600 | Black |
| 4 | $9,000 | Silver |

2603

**Fig.** 25

701

702

$$\begin{array}{c c c} \mathbf{v_1} & \mathbf{v_2} & \mathbf{v_3} \end{array}$$

$$\begin{array}{c} \mathbf{v_1} \\ \mathbf{v_2} \\ \mathbf{v_3} \end{array} \begin{pmatrix} 1.0 & 0.3 & 0.4 \\ 0.7 & 1.0 & 0.2 \\ 0.1 & 0.9 & 1.0 \end{pmatrix}$$

703

Fig. 26

Fig. 27

Fig. 28

Fig. 29

**Fig.** 30

2 1200

**input:** query containing attribute value pairs, number of desired results K and weights.

**output:** ranked list of documents with their respective global similarity value σ ordered decreasingly by σ.

Initialize τ;

**While** *not done* **do**
    Compute minimal local similarities $(m_1,...,m_M)$ for τ;
    Find biggest possible M-cuboid $C$ that fits above the M-plane given by τ;
    Construct count-only orthogonal range query $Q_C$ corresponding to $C$;
    $k \leftarrow$ result of query $Q_C$;
    **If** $k \geq K$ **then**
        done true;
    **end**
    **If** $k < K$ **then**
        lower τ;
    **end**
**end**

Construct range query Q corresponding to minimal local similarities $(m_1,...,m_M)$;

Execute Q to retrieve the candidate documents;

Calculate their global similarity σ and use a priority queue of size $K$ to keep them ordered;

# Fig. 31